# EUROPEAN PATENT SPECIFICATION

(11) **EP 2 941 882 B1**
(45) Date of publication and mention of the grant of the patent: **12.04.2017**
(21) Application number: 13819174.7
(22) Date of filing: 23.12.2013
(51) Int. Cl.: H04N 19/105, H04N 19/134, H04N 19/174, H04N 19/187, H04N 19/33, H04N 19/59

(54) **INTER-LAYER REFERENCE PICTURE GENERATION FOR HLS-ONLY SCALABLE VIDEO CODING**
ZWISCHENSCHICHT-REFERENZBILDERZEUGUNG FÜR EINE SKALIERBARE NUR-HLS-VIDEOCODIERUNG
GÉNÉRATION D'IMAGE DE RÉFÉRENCE INTER-COUCHE POUR CODAGE VIDÉO À EXTENSION HLS SEULE

(30) Priority: 07.01.2013 US 201361749829 P; 20.12.2013 US 201314137889
(43) Date of publication of application: 11.11.2015
(73) Proprietor: Qualcomm Incorporated, San Diego, CA 92121-1714 (US)
(72) Inventor: CHEN, Jianle, San Diego, California 92121-1714 (US); SEREGIN, Vadim, San Diego, California 92121-1714 (US); GUO, Liwei, San Diego, California 92121-1714 (US); KARCZEWICZ, Marta, San Diego, California 92121-1714 (US)
(74) Representative: Bentall, Mark James
(86) International application number: PCT/US2013/077451
(87) International publication number: WO 2014/107366

(56) References cited:
- WO-A1-2008/060125
- CHEN J ET AL: "On slice level information derivation and motion field mapping for resampled interlayer reference picture", 15. JCT-VC MEETING; 23-10-2013 - 1-11-2013; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, no. JCTVC-O0216, 30 October 2013 (2013-10-30), XP030115265,
- CHEN J ET AL: "Derivation of picture and slice level information for resampled interlayer reference picture", 14. JCT-VC MEETING; 25-7-2013 - 2-8-2013; VIENNA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, no. JCTVC-N0334, 23 July 2013 (2013-07-23) , XP030114882,
- CHEN (QUALCOMM) J ET AL: "A proposal for Scalable HEVC Test Model", 102. MPEG MEETING; 15-10-2012 - 19-10-2012; SHANGHAI; (MOTION PICTURE EXPERT GROUP OR ISO/IEC JTC1/SC29/WG11), no. m27117, 17 October 2012 (2012-10-17), XP030055428,
- EDOUARD FRANCOIS ET AL: "Extended Spatial Scalability: A generalization of spatial scalability for SVC Extension of AVC/H.264", 25. PICTURE CODING SYMPOSIUM;24-4-2006 - 26-4-2006; BEIJING,, 24 April 2006 (2006-04-24), XP030080338,

## Description

### FIELD

This disclosure relates to video coding.

### BACKGROUND

Digital video capabilities can be incorporated into a wide range of devices, including digital televisions, digital direct broadcast systems, wireless broadcast systems, personal digital assistants (PDAs), laptop or desktop computers, tablet computers, e-book readers, digital cameras, digital recording devices, digital media players, video gaming devices, video game consoles, cellular or satellite radio telephones, so-called "smart phones," video teleconferencing devices, video streaming devices, and the like. Digital video devices implement video coding techniques, such as those described in the standards defined by MPEG-2, MPEG-4, ITU-T H.263, ITU-T H.264/MPEG-4, Part 10, Advanced Video Coding (AVC), the High Efficiency Video Coding (HEVC) standard presently under development, and extensions of such standards. The video devices may transmit, receive, encode, decode, and/or store digital video information more efficiently by implementing such video coding techniques.

Video coding techniques include spatial (e.g., intra-picture) prediction and/or temporal (e.g., inter-picture) prediction to reduce or remove redundancy inherent in video sequences. For block-based video coding, a video slice (e.g., a video frame or a portion of a video frame) may be partitioned into video blocks, which may also be referred to as treeblocks, coding units (CUs) and/or coding nodes. Video blocks in an intra-coded (I) slice of a picture are encoded using spatial prediction with respect to reference samples in neighboring blocks in the same picture. Video blocks in an inter-coded (P or B) slice of a picture may use spatial prediction with respect to reference samples in neighboring blocks in the same picture or temporal prediction with respect to reference samples in other reference pictures. Pictures may be referred to as frames, and reference pictures may be referred to a reference frames.

Spatial or temporal prediction results in a predictive block for a block to be coded. The prediction block can be used by an encoder or decoder to determine residual data. Residual data represents pixel differences between the original block to be coded and the predictive block. An inter-coded block is encoded according to a motion vector that points to a block of reference samples forming the predictive block, and the residual data indicating the difference between the coded block and the predictive block. An intra-coded block is encoded according to an intra-coding mode and the residual data. For further compression, the residual data may be transformed from the pixel domain to a transform domain, resulting in residual transform coefficients, which then may be quantized. The quantized transform coefficients, initially arranged in a two-dimensional array, may be scanned in order to produce a one-dimensional vector of transform coefficients, and entropy coding may be applied to achieve even more compression.
WO 2008/060125 A1 discloses a method of decoding a current layer using inter-layer prediction. It describes obtaining a first flag information indicating whether a current block of the current layer is coded using the inter-layer prediction, obtaining a quality identification information identifying a quality of the current block, obtaining a second flag information based on the first flag information and the quality identification information, the second flag information indicating whether a reference block is included in a specific slice of a reference layer, and decoding the current block based on the second flag information.

### SUMMARY

The invention is defined in the appended claim set to which reference should now be made.

For purposes of summarizing the disclosure, certain aspects, advantages and novel features have been described herein. It is to be understood that not necessarily all such advantages can be achieved in accordance with any particular embodiment disclosed herein. Thus, the features disclosed herein can be embodied or carried out in a manner that achieves or optimizes one advantage or group of advantages as taught herein without necessarily achieving other advantages as can be taught or suggested herein.

In accordance with some embodiments of the present disclosure, an apparatus for coding video information is presented. The apparatus may include a memory unit configured to store video information associated with a picture. Further, the apparatus may include a processor in communication with the memory unit. The processor may be configured to resample video information of a reference picture to obtain a resampled picture. This reference picture may have a plurality of slices and have a different picture size than a picture to be encoded. Further, the processor may determine slice definitions for a plurality of slices in the resampled picture. The plurality of slices of the resampled picture may correspond to a plurality of slices of the reference picture. In addition, the processor may determine, based at least partially on the slice definitions, whether each of the plurality of slices of the resampled picture satisfies one or more slice definition rules. In response to determining that at least one of the plurality of slices of the resampled picture does not satisfy at least one slice definition rule, the processor can modify the slice definition for at least some of the plurality of slices in the resampled picture that do not satisfy the at least one slice definition rule so as to satisfy the slice definition rule.

In certain embodiments, the processor may be further configured to determine whether each of the plurality of slices of the resampled picture satisfies the one or more slice definition rules by determining whether a slice from the plurality of slices in the resampled picture includes a disparity between a height of the slice in a first column and a height of the slice in a previous column that is greater than one largest coding unit (LCU). Moreover, the processor may be further configured to determine whether each of the plurality of slices of the resampled picture satisfies the one or more slice definition rules by determining whether a slice from the plurality of slices in the resampled picture includes more than one incomplete scan line.

In addition, the processor may be further configured to determine whether each of the plurality of slices in the resampled picture satisfies the one or more slice definition rules by determining whether a slice from the plurality of slices in the resampled picture includes a partial LCU. Moreover, the processor may be further configured to modify the slice definition for at least some of the plurality of slices in the resampled picture that do not satisfy at least one slice definition rule by rounding the partial LCU. Rounding the partial LCU may include modifying the slice definition for at least one slice of the plurality of slices in the resampled picture that includes the partial LCU to remove the partial LCU from the slice definition. Further, rounding the partial LCU may include modifying the slice definition for at least one slice of the plurality of slices in the resampled picture that includes the partial LCU to include the entire LCU corresponding to the partial LCU in the slice definition.

In addition, the processor may be further configured to modify the slice definition for at least some of the plurality of slices in the resampled picture that do not satisfy at least one slice definition rule by dividing at least one slice of the plurality of resampled slices into multiple sub-slices. Further, for at least some sub-slices of the multiple sub-slices, the processor may be further configured to associate at least some of the information included in a slice header of the at least one slice of the plurality of slices in the resampled picture with a slice header of the sub-slice.

In some embodiments, the reference picture is a reference picture for a single layer video codec. Further, the processor may be further configured to add the resampled picture to a reference picture list for the current picture to be encoded. Moreover, the processor may be further configured to use the resampled reference picture as a collocated picture for temporal motion vector derivation.

In some embodiments, the reference picture is a reference picture from a lower layer than the picture to be encoded in a multi-layer video codec. Further, the processor may be further configured to use the resampled picture to perform inter layer prediction. Moreover, the processor may be further configured to add the resampled picture to a reference picture list for the picture to be encoded. In addition, the processor may be further configured to use the reference picture as a collocated picture for temporal motion vector derivation.

Further, the processor may be further configured to encode the picture to be encoded using the resampled picture. Moreover, the processor may be further configured to decode the picture using the resampled picture. The processor may also be configured to associate each block in the resampled picture with a slice header of the slice which includes the collocated block in the reference picture. In some cases, the block size is 16x16. In certain embodiments, the apparatus may further include one or more of a desktop computer, a notebook computers, a laptop computer, a tablet computer, a set-top box, a telephone handset, a smart phone, a smart pad, a television, a camera, a display device, a digital media player, a video gaming console, or a video streaming device.

In accordance with certain embodiments of the present disclosure, a method of coding video information is presented. The method may include resampling video information of a reference picture of a picture to be encoded to obtain a resampled picture. The reference picture may have a plurality of slices and a different picture size than the picture to be encoded. Further, the method may include determining slice definitions for a plurality of resampled slices in the resampled picture. The plurality of slices of the resampled picture may correspond to a plurality of slices of the reference picture. The method may further include determining, based at least partially on the slice definitions, whether each of the plurality of slices of the resampled picture satisfies one or more slice definition rules. In response to determining that at least one of the plurality of slices of the resampled picture does not satisfy at least one slice definition rule, the method can include modifying the slice definition for at least some of the plurality of slices in the resampled picture that do not satisfy the at least one slice definition scan rule to satisfy the at least one slice definition rule.

In some cases, said determining may include determining whether each of the plurality of slices of the resampled picture satisfies the one or more slice definition rules by determining whether a slice from the plurality of slices in the resampled picture includes a disparity between a height of the slice in a first column and a height of the slice in a previous column that is greater than one largest coding unit (LCU). Further, said determining may include determining whether each of the plurality of slices of the resampled picture satisfies the one or more slice definition rules by determining whether a slice from the plurality of slices in the resampled picture includes more than one incomplete scan line.

In addition, said determining may include determining whether each of the plurality of slices of the resampled picture satisfies the one or more slice definition rules by determining whether a slice from the plurality of slices in the resampled picture includes a partial LCU. Further, said modifying may include rounding the partial LCU. Rounding the partial LCU may include modifying the slice definition for at least one slice of the plurality of slices in the resampled picture that includes the partial LCU to remove the partial LCU from the slice definition. Further, rounding the partial LCU may include modifying the slice definition for at least one slice of the plurality of slices in the resampled picture that includes the partial LCU to include the entire LCU corresponding to the partial LCU in the slice definition.

In addition, said modifying may include dividing at least one slice of the plurality of slices into multiple sub-slices. Further, for at least some sub-slices of the multiple sub-slices, the method may further include associating at least some of the information included in a slice header of the at least one slice of the plurality of slices in the resampled picture with a slice header of the sub-slice.

In some embodiments, the reference picture is a reference picture for a single layer video codec. Further, the method may include adding the resampled picture to a reference picture list for the picture to be encoded. In addition, the method may include using the resampled reference picture as a collocated picture for temporal motion vector derivation.

In some embodiments, the reference picture is a reference picture from a lower layer than the picture to be encoded in a multi-layer video codec. Further, the method may include using the resampled picture to perform inter layer prediction. In addition, the method may include adding the resampled picture to a reference picture list for the picture to be encoded. Moreover, the method may include using the resampled reference picture as a collocated picture for temporal motion vector derivation.

Further, the method may include encoding the picture to be encoded using the resampled picture. Moreover, the method may include decoding an encoded copy of the picture using the resampled layer. In addition, the method may include associating each block in the resampled picture with a slice header of the slice which includes the collocated block in the reference picture. The block may have a block size of 16x16.

In certain embodiments of the present disclosure, a non-transitory computer-readable storage media having instructions stored thereon that when executed cause an apparatus comprising at least one processor to resample video information of a reference picture to obtain a resampled picture. The reference picture may have a plurality of slices and a different picture size than a picture to be encoded. Further, the apparatus may determine slice definitions for a plurality of slices in the resampled picture. The plurality of slices of the resampled picture may correspond to a plurality of slices of the reference picture. In addition, the apparatus may determine, based at least partially on the slice definitions, whether each of the plurality of slices of the resampled picture satisfies one or more slice definition rules. In response to determining that at least one of the plurality of slices of the resampled picture does not satisfy at least one slice definition rule, the apparatus may modify the slice definition for at least some of the plurality of slices in the resampled picture that do not satisfy the at least one slice definition rule to satisfy the slice definition rule.

In some cases, the apparatus is further configured to determine whether each of the plurality of slices of the resampled picture satisfies the one or more slice definition rules by determining whether a slice from the plurality of slices of the resampled picture includes a partial LCU. Further, the apparatus may be further configured to modify the slice definition for at least some of the plurality of slices of the resampled picture that do not satisfy at least one slice definition rule by modifying the slice definition for at least one slice of the plurality of slices that includes the partial block to either (1) remove the partial LCU from the slice definition; or (2) include the entire LCU corresponding to the partial LCU in the slice definition. In addition, the apparatus may be further configured to modify the slice definition for at least some of the plurality of slices of the resampled picture that do not satisfy at least one slice definition rule by dividing at least one slice of the plurality of slices into multiple sub-slices.

In certain embodiments of the present disclosure, an apparatus configured to code video information is presented. The apparatus may include a means for storing video information associated with a picture and means for resampling video information of the picture to obtain a resampled picture. The picture may have a plurality of slices. Further, the apparatus may include a means for determining slice definitions for a plurality of slices of the resampled picture. The plurality of slices of the resampled picture may correspond to the plurality of slices of the picture. In addition, the apparatus may include a means for determining, based at least partially on the slice definitions, whether each of the plurality of slices of the resampled picture satisfies one or more slice definition rules. Moreover, the apparatus may include a means for modifying the slice definition for at least some of the plurality of slices of the resampled picture in response to determining that at least one of the plurality of slices of the resampled picture does not satisfy at least one of the one or more slice definition rules.

In some cases, at least two of the said means for storing video information, means for resampling, means for determining slice definitions, means for determining, and means for modifying comprise the same means. Further, said means for determining may be further configured to determine whether each of the plurality of slices of the resampled picture satisfies the one or more slice definition scan rules by determining whether a slice from the plurality of slices of the resampled picture includes a partial LCU. In addition, said means for modifying can be further configured to modify the slice definition for at least some of the plurality of slices of the resampled picture by modifying the slice definition for at least one slice of the plurality of slices that includes the partial LCU to either (1) remove the partial LCU from the slice definition; or (2) include the entire LCU corresponding to the partial LCU in the slice definition. Moreover, said means for modifying may be further configured to modify the slice definition for at least some of the plurality of slices of the resampled layer by dividing at least one slice of the plurality of slices into multiple sub-slices.

### BRIEF DESCRIPTION OF DRAWINGS

Throughout the drawings, reference numbers are re-used to indicate correspondence between referenced elements. The drawings are provided to illustrate embodiments of the inventive subject matter described herein and not to limit the scope thereof.
FIG. 1 is a block diagram illustrating an example video encoding and decoding system that may utilize techniques in accordance with aspects described in this disclosure.
FIG. 2A is a block diagram illustrating an example of a single layer video encoder that may implement techniques in accordance with aspects described in this disclosure.
FIG. 2B is a block diagram illustrating an example of a multi-layer video encoder that may implement techniques in accordance with aspects described in this disclosure.
FIG. 3A is a block diagram illustrating an example of a single layer video decoder that may implement techniques in accordance with aspects described in this disclosure.
FIG. 3B is a block diagram illustrating an example of a multi-layer video decoder that may implement techniques in accordance with aspects described in this disclosure.
FIGs. 4A-4C illustrate a first example of generating an resampled picture (e.g., an upsampled base layer picture).
FIGs. 5A-5C illustrate a second example of generating an resampled picture (e.g., an upsampled base layer picture)
FIG. 6 presents a flowchart illustrating a first example of a process for upsampling a base layer picture.
FIG. 7 presents a flowchart illustrating a second example of a process for upsampling a base layer picture.

### DETAILED DESCRIPTION

The techniques described in this disclosure generally relate to video coding, scalable video coding (SVC, SHVC), multiview coding, and 3D video coding. For example, the techniques may be related to, and used with or within, a High Efficiency Video Coding (HEVC) and its scalable video coding (SVC, SHVC) extension. As mentioned above, in video coded according to the SVC extension, there could be multiple layers of video information. The layer at the very bottom level may serve as a base layer (BL), and the layer at the very top may serve as an enhanced layer (EL). The "enhanced layer" is sometimes referred to as an "enhancement layer," and these terms may be used interchangeably. All layers in the middle may serve as either or both ELs or BLs. For example, a layer in the middle may be an EL for the layers below it, such as the base layer or any intervening enhancement layers, and at the same time serve as a BL for the enhancement layers above it.

For purposes of illustration only, the techniques described in the disclosure are described with examples including only two layers (e.g., lower level layer such as the base layer, and a higher level layer such as the enhanced layer). It should be understood that the examples described in this disclosure can be extended to examples with multiple base layers and enhancement layers as well.

Video coding standards include ITU-T H.261, ISO/IEC MPEG-1 Visual, ITU-T H.262 or ISO/IEC MPEG-2 Visual, ITU-T H.263, ISO/IEC MPEG-4 Visual and ITU-T H.264 (also known as ISO/IEC MPEG-4 AVC), including its Scalable Video Coding (SVC) and Multiview Video Coding (MVC) extensions. In addition, a new video coding standard, namely High Efficiency Video Coding (HEVC), is being developed by the Joint Collaboration Team on Video Coding (JCT-VC) of ITU-T Video Coding Experts Group (VCEG) and ISO/IEC Motion Picture Experts Group (MPEG). A recent draft of HEVC is available from http://wg11.sc29.org/jct/doc_end_user/current_document.php?id=5885/JCTVC-I1003-v2, as of June 7, 2012. Another recent draft of the HEVC standard, referred to as "HEVC Working Draft 7" is downloadable from http://phenix.it-sudparis.eu/jct/doc_end_user/documents/9_Geneva/wg11/JCTVC-11003-v3.zip, as of June 7, 2012. The full citation for the HEVC Working Draft 7 is document HCTVC-11003, Bross et al., "High Efficiency Video Coding (HEVC) Text Specification Draft 7," Joint Collaborative Team on Video Coding (JCT-VC) of ITU-T SG16 WP3 and ISO/IEC JTC1/SC29/WG11, 9th Meeting: Geneva, Switzerland, April 27, 2012 to May 7, 2012. Each of these references is incorporated by reference in its entirety.

Scalable video coding (SVC) may be used to provide quality (also referred to as signal-to-noise (SNR)) scalability, spatial scalability and/or temporal scalability. An enhanced layer may have different spatial resolution than base layer. For example, the spatial aspect ratio between EL and BL can be 1.0, 1.5, 2.0 or other different ratios. In other words, the spatial aspect of the EL may equal 1.0, 1.5, or 2.0 times the spatial aspect of the BL. In some examples, the scaling factor of the EL may be greater than the BL. For example, a size of pictures in the EL may be greater than a size of pictures in the BL. In this way, it may be possible, although not a limitation, that the spatial resolution of the EL is larger than the spatial resolution of the BL.

In the SVC extension for H.264, prediction of a current block (e.g., a current block in the EL) may be performed using the different layers that are provided for SVC. Such prediction may be referred to as inter-layer prediction. Inter-layer prediction methods may be utilized in SVC in order to reduce inter-layer redundancy, thereby improving coding efficiency and reducing computational resource requirements. Some examples of inter-layer prediction may include inter-layer intra prediction, inter-layer motion prediction, and inter-layer residual prediction. Inter-layer intra prediction uses the reconstruction of co-located blocks in the base layer to predict the current block in the enhancement layer. Inter-layer motion prediction uses motion information of the base layer to predict motion in the enhancement layer. Inter-layer residual prediction uses the residue of the base layer to predict the residue of the enhancement layer.

In some embodiments, an enhancement layer may be created based on a base layer. For example, upsample filtering, sometimes referred to as resample filtering, may be applied to a base layer in order to increase the spatial resolution of the base layer to create or be used to create (e.g., as a reference picture) an enhancement layer. This process may be referred to as spatial scalability.

The base layer may be divided into a number of slices that can include one or more coding tree units. Typically, although not necessarily, slices may be processed by a system (e.g., an encoder or decoder) following a raster scan pattern. When processing a slice following a raster scan pattern, the coding tree units that make up a slice may be processed block by block a line at a time.

When the base layer is upsampled to create or to be used to create the enhancement layer, the slices may be similarly increased in size. In other words, if the base layer is increased by a factor of two, each slice of the base layer may be increased by a factor of two. As a result, the slices of the enhancement layer may no longer be organized to satisfy raster scan processing rules. In other words, in some cases, when following a raster scan order during processing of the enhancement layer, the blocks of the slices may be intermingled such that a block from a second slice may be processed before the first slice has been completely processed. Further, in some cases, creating the upsampled layer may result in slices including partial coding tree units. Generally, each slice is associated with a slice header that includes slice-specific information. When a coding tree unit is split across slices, determining appropriate slice header information for the slices that include the coding tree unit can be complicated and lead to coding inefficiency and other undesirable results.

Advantageously, embodiments of the present disclosure can modify or reorganize slice definitions for the upsampled base layer, which may be an enhancement layer and/or may be used to create an enhacenement layer, to maintain raster scan processing order. The approaches of this disclosure can analyze the slice definitions for an upsampled layer or enhancement layer and divide slices such that each slice, and newly created slice, can be processed in its entirety when using raster scan processing before processing another slice. Further, the techniques disclosed herein can modify the division of slices in the enhancement layer to prevent the inclusion of partial coding tree units in a slice.

Various aspects of the novel systems, apparatuses, and methods are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the novel systems, apparatuses, and methods disclosed herein, whether implemented independently of, or combined with, any other aspect of the invention. For example, an apparatus may be implemented or a method may be practiced using any number of the aspects set forth herein. In addition, the scope of the invention is intended to cover such an apparatus or method which is practiced using other structure, functionality, or structure and functionality in addition to or other than the various aspects of the invention set forth herein. It should be understood that any aspect disclosed herein may be embodied by one or more elements of a claim.

Although particular aspects are described herein, many variations and permutations of these aspects fall within the scope of the disclosure. Although some benefits and advantages of the preferred aspects are mentioned, the scope of the disclosure is not intended to be limited to particular benefits, uses, or objectives. Rather, aspects of the disclosure are intended to be broadly applicable to different wireless technologies, system configurations, networks, and transmission protocols, some of which are illustrated by way of example in the figures and in the following description of the preferred aspects. The detailed description and drawings are merely illustrative of the disclosure rather than limiting, the scope of the disclosure being defined by the appended claims and equivalents thereof.

### Example Video Encoding and Decoding System

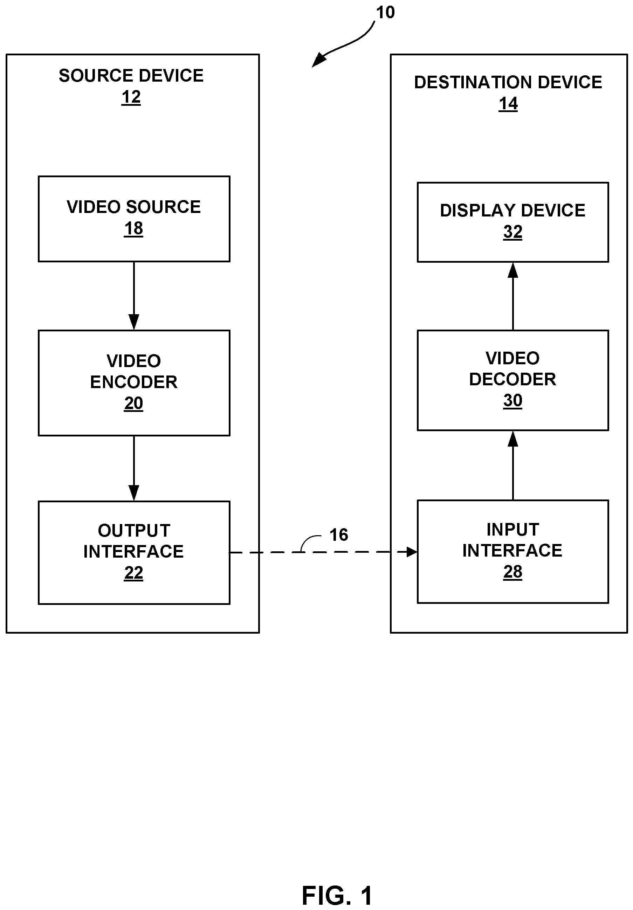

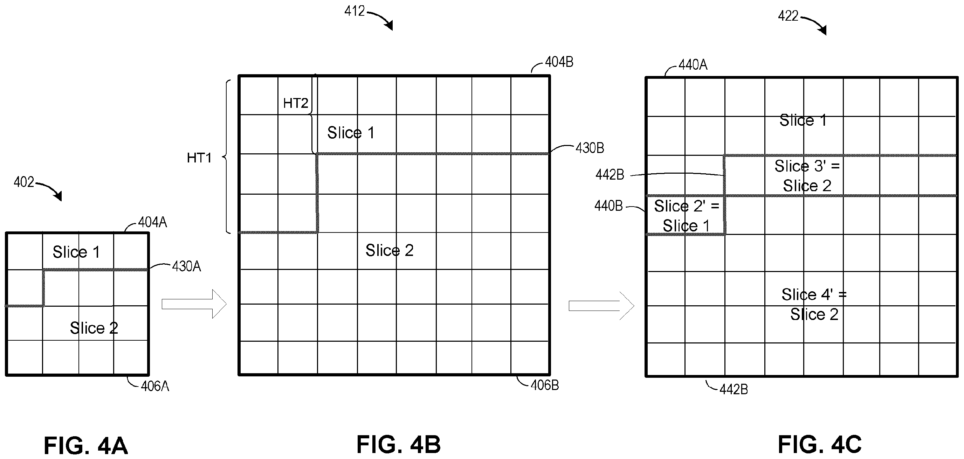

FIG. 1 is a block diagram illustrating an example video encoding and decoding system 10 that may utilize techniques in accordance with aspects described in this disclosure. For example, various modules of the system 10 may be configured to perform the enhancement layer creation techniques described in greater detail below with respect to FIGs. 4-7.

As shown in FIG. 1, system 10 includes a source device 12 that provides encoded video data to be decoded at a later time by a destination device 14. In particular, source device 12 may provide the video data to destination device 14 via a computer-readable medium 16. Source device 12 and destination device 14 may comprise any of a wide range of devices, including desktop computers, notebook (e.g., laptop) computers, tablet computers, set-top boxes, telephone handsets such as so-called "smart" phones, so-called "smart" pads, televisions, cameras, display devices, digital media players, video gaming consoles, video streaming device, or the like. In some cases, source device 12 and destination device 14 may be equipped for wireless communication.

Destination device 14 may receive the encoded video data to be decoded via computer-readable medium 16. Computer-readable medium 16 may comprise any type of medium or device capable of moving the encoded video data from source device 12 to destination device 14. In one example, computer-readable medium 16 may comprise a communication medium to enable source device 12 to transmit encoded video data directly to destination device 14 in real-time. The encoded video data may be modulated according to a communication standard, such as a wireless communication protocol, and transmitted to destination device 14. The communication medium may comprise any wireless or wired communication medium, such as a radio frequency (RF) spectrum or one or more physical transmission lines. The communication medium may form part of a packet-based network, such as a local area network, a wide-area network, or a global network such as the Internet. The communication medium may include routers, switches, base stations, or any other equipment that may be useful to facilitate communication from source device 12 to destination device 14.

In some examples, encoded data may be output from output interface 22 to a storage device. Similarly, encoded data may be accessed from the storage device by input interface. The storage device may include any of a variety of distributed or locally accessed data storage media such as a hard drive, Blu-ray discs, DVDs, CD-ROMs, flash memory, volatile or non-volatile memory, or any other suitable digital storage media for storing encoded video data. In a further example, the storage device may correspond to a file server or another intermediate storage device that may store the encoded video generated by source device 12. Destination device 14 may access stored video data from the storage device via streaming or download. The file server may be any type of server capable of storing encoded video data and transmitting that encoded video data to the destination device 14. Example file servers include a web server (e.g., for a website), an FTP server, network attached storage (NAS) devices, or a local disk drive. Destination device 14 may access the encoded video data through any standard data connection, including an Internet connection. This may include a wireless channel (e.g., a Wi-Fi connection), a wired connection (e.g., DSL, cable modem, etc.), or a combination of both that is suitable for accessing encoded video data stored on a file server. The transmission of encoded video data from the storage device may be a streaming transmission, a download transmission, or a combination thereof.

The techniques of this disclosure are not necessarily limited to wireless applications or settings. The techniques may be applied to video coding in support of any of a variety of multimedia applications, such as over-the-air television broadcasts, cable television transmissions, satellite television transmissions, Internet streaming video transmissions, such as dynamic adaptive streaming over HTTP (DASH), digital video that is encoded onto a data storage medium, decoding of digital video stored on a data storage medium, or other applications. In some examples, system 10 may be configured to support one-way or two-way video transmission to support applications such as video streaming, video playback, video broadcasting, and/or video telephony.

In the example of FIG. 1, source device 12 includes video source 18, video encoder 20, and output interface 22. Destination device 14 includes input interface 28, video decoder 30, and display device 32. In accordance with this disclosure, video encoder 20 of source device 12 may be configured to apply the techniques for coding a bitstream including video data conforming to multiple standards or standard extensions. In other examples, a source device and a destination device may include other components or arrangements. For example, source device 12 may receive video data from an external video source 18, such as an external camera. Likewise, destination device 14 may interface with an external display device, rather than including an integrated display device.

The illustrated system 10 of FIG. 1 is merely one example. Techniques for determining candidates for a candidate list for motion vector predictors for a current block may be performed by any digital video encoding and/or decoding device. Although generally the techniques of this disclosure are performed by a video encoding device, the techniques may also be performed by a video encoder/decoder, typically referred to as a "CODEC." Moreover, the techniques of this disclosure may also be performed by a video preprocessor. Source device 12 and destination device 14 are merely examples of such coding devices in which source device 12 generates coded video data for transmission to destination device 14. In some examples, devices 12, 14 may operate in a substantially symmetrical manner such that each of devices 12, 14 include video encoding and decoding components. Hence, system 10 may support one-way or two-way video transmission between video devices 12, 14, e.g., for video streaming, video playback, video broadcasting, or video telephony.

Video source 18 of source device 12 may include a video capture device, such as a video camera, a video archive containing previously captured video, and/or a video feed interface to receive video from a video content provider. As a further alternative, video source 18 may generate computer graphics-based data as the source video, or a combination of live video, archived video, and computer-generated video. In some cases, if video source 18 is a video camera, source device 12 and destination device 14 may form so-called camera phones or video phones. As mentioned above, however, the techniques described in this disclosure may be applicable to video coding in general, and may be applied to wireless and/or wired applications. In each case, the captured, pre-captured, or computer-generated video may be encoded by video encoder 20. The encoded video information may then be output by output interface 22 onto a computer-readable medium 16.

Computer-readable medium 16 may include transient media, such as a wireless broadcast or wired network transmission, or storage media (that is, non-transitory storage media), such as a hard disk, flash drive, compact disc, digital video disc, Blu-ray disc, or other computer-readable media. In some examples, a network server (not shown) may receive encoded video data from source device 12 and provide the encoded video data to destination device 14, e.g., via network transmission, direct wired communication, etc. Similarly, a computing device of a medium production facility, such as a disc stamping facility, may receive encoded video data from source device 12 and produce a disc containing the encoded video data. Therefore, computer-readable medium 16 may be understood to include one or more computer-readable media of various forms, in various examples.

Input interface 28 of destination device 14 receives information from computer-readable medium 16. The information of computer-readable medium 16 may include syntax information defined by video encoder 20, which is also used by video decoder 30, that includes syntax elements that describe characteristics and/or processing of blocks and other coded units, e.g., GOPs. Display device 32 displays the decoded video data to a user, and may comprise any of a variety of display devices such as a cathode ray tube (CRT), a liquid crystal display (LCD), a plasma display, an organic light emitting diode (OLED) display, or another type of display device.

Video encoder 20 and video decoder 30 may operate according to a video coding standard, such as the High Efficiency Video Coding (HEVC) standard presently under development, and may conform to the HEVC Test Model (HM). Alternatively, video encoder 20 and video decoder 30 may operate according to other proprietary or industry standards, such as the ITU-T H.264 standard, alternatively referred to as MPEG-4, Part 10, Advanced Video Coding (AVC), or extensions of such standards. The techniques of this disclosure, however, are not limited to any particular coding standard, including but not limited to any of the standards listed above. Other examples of video coding standards include MPEG-2 and ITU-T H.263. Although not shown in FIG. 1, in some aspects, video encoder 20 and video decoder 30 may each be integrated with an audio encoder and decoder, and may include appropriate MUX-DEMUX units, or other hardware and software, to handle encoding of both audio and video in a common data stream or separate data streams. If applicable, MUX-DEMUX units may conform to the ITU H.223 multiplexer protocol, or other protocols such as the user datagram protocol (UDP).

Video encoder 20 and video decoder 30 each may be implemented as any of a variety of suitable encoder circuitry, such as one or more microprocessors, digital signal processors (DSPs), application specific integrated circuits (ASICs), field programmable gate arrays (FPGAs), discrete logic, software, hardware, firmware or any combinations thereof. When the techniques are implemented partially in software, a device may store instructions for the software in a suitable, non-transitory computer-readable medium and execute the instructions in hardware using one or more processors to perform the techniques of this disclosure. Each of video encoder 20 and video decoder 30 may be included in one or more encoders or decoders, either of which may be integrated as part of a combined encoder/decoder (CODEC) in a respective device. A device including video encoder 20 and/or video decoder 30 may comprise an integrated circuit, a microprocessor, and/or a wireless communication device, such as a cellular telephone.

Some HEVC standardization efforts are based on an evolving model of a video coding device referred to as the HEVC Test Model (HM). The HM presumes several additional capabilities of video coding devices relative to existing devices according to, e.g., ITU-T H.264/AVC. For example, whereas H.264 provides nine intra-prediction encoding modes, the HM may provide as many as thirty-three intra-prediction encoding modes.

In general, the working model of the HM describes that a video frame or picture may be divided into a sequence of treeblocks or largest coding units (LCU) that include both luma and chroma samples. Syntax data within a bitstream may define a size for the LCU, which is a largest coding unit in terms of the number of pixels. A slice includes a number of consecutive treeblocks in coding order. A video frame or picture may be partitioned into one or more slices. Each treeblock may be split into coding units (CUs) according to a quadtree. In general, a quadtree data structure includes one node per CU, with a root node corresponding to the treeblock. If a CU is split into four sub-CUs, the node corresponding to the CU includes four leaf nodes, each of which corresponds to one of the sub-CUs.

Each node of the quadtree data structure may provide syntax data for the corresponding CU. For example, a node in the quadtree may include a split flag, indicating whether the CU corresponding to the node is split into sub-CUs. Syntax elements for a CU may be defined recursively, and may depend on whether the CU is split into sub-CUs. If a CU is not split further, it is referred as a leaf-CU. In this disclosure, four sub-CUs of a leaf-CU will also be referred to as leaf-CUs even if there is no explicit splitting of the original leaf-CU. For example, if a CU at 16x16 size is not split further, the four 8x8 sub-CUs will also be referred to as leaf-CUs although the 16x16 CU was never split. In some embodiments, a CU can be split into two sub-CUs, or some other number of sub-CUs.

A CU has a similar purpose as a macroblock of the H.264 standard, except that a CU does not have a size distinction. For example, a treeblock may be split into four child nodes (also referred to as sub-CUs), and each child node may in turn be a parent node and be split into another four child nodes. A final, unsplit child node, referred to as a leaf node of the quadtree, comprises a coding node, also referred to as a leaf-CU. Syntax data associated with a coded bitstream may define a maximum number of times a treeblock may be split, referred to as a maximum CU depth, and may also define a minimum size of the coding nodes. Accordingly, a bitstream may also define a smallest coding unit (SCU). This disclosure uses the term "block" to refer to any of a CU, PU, or TU, in the context of HEVC, or similar data structures in the context of other standards (e.g., macroblocks and sub-blocks thereof in H.264/AVC).

A CU includes a coding node and prediction units (PUs) and transform units (TUs) associated with the coding node. A size of the CU corresponds to a size of the coding node and must be square in shape. The size of the CU may range from 8x8 pixels up to the size of the treeblock with a maximum of 64x64 pixels or greater. Each CU may contain one or more PUs and one or more TUs. Syntax data associated with a CU may describe, for example, partitioning of the CU into one or more PUs. Partitioning modes may differ between whether the CU is skip or direct mode encoded, intra-prediction mode encoded, or inter-prediction mode encoded. PUs may be partitioned to be non-square in shape. Syntax data associated with a CU may also describe, for example, partitioning of the CU into one or more TUs according to a quadtree. A TU can be square or non-square (e.g., rectangular) in shape.

The HEVC standard allows for transformations according to TUs, which may be different for different CUs. The TUs are typically sized based on the size of PUs within a given CU defined for a partitioned LCU, although this may not always be the case. The TUs are typically the same size or smaller than the PUs. In some examples, residual samples corresponding to a CU may be subdivided into smaller units using a quadtree structure known as "residual quad tree" (RQT). The leaf nodes of the RQT may be referred to as transform units (TUs). Pixel difference values associated with the TUs may be transformed to produce transform coefficients, which may be quantized.

A leaf-CU may include one or more prediction units (PUs). In general, a PU represents a spatial area corresponding to all or a portion of the corresponding CU, and may include data for retrieving a reference sample for the PU. Moreover, a PU includes data related to prediction. For example, when the PU is intra-mode encoded, data for the PU may be included in a residual quadtree (RQT), which may include data describing an intra-prediction mode for a TU corresponding to the PU. As another example, when the PU is inter-mode encoded, the PU may include data defining one or more motion vectors for the PU. The data defining the motion vector for a PU may describe, for example, a horizontal component of the motion vector, a vertical component of the motion vector, a resolution for the motion vector (e.g., one-quarter pixel precision or one-eighth pixel precision), a reference picture to which the motion vector points, and/or a reference picture list (e.g., List 0, List 1, or List C) for the motion vector.

A leaf-CU having one or more PUs may also include one or more transform units (TUs). The transform units may be specified using an RQT (also referred to as a TU quadtree structure), as discussed above. For example, a split flag may indicate whether a leaf-CU is split into four transform units. Then, each transform unit may be split further into further sub-TUs. When a TU is not split further, it may be referred to as a leaf-TU. Generally, for intra coding, all the leaf-TUs belonging to a leaf-CU share the same intra prediction mode. That is, the same intra-prediction mode is generally applied to calculate predicted values for all TUs of a leaf-CU. For intra coding, a video encoder may calculate a residual value for each leaf-TU using the intra prediction mode, as a difference between the portion of the CU corresponding to the TU and the original block. A TU is not necessarily limited to the size of a PU. Thus, TUs may be larger or smaller than a PU. For intra coding, a PU may be collocated with a corresponding leaf-TU for the same CU. In some examples, the maximum size of a leaf-TU may correspond to the size of the corresponding leaf-CU.

Moreover, TUs of leaf-CUs may also be associated with respective quadtree data structures, referred to as residual quadtrees (RQTs). That is, a leaf-CU may include a quadtree indicating how the leaf-CU is partitioned into TUs. The root node of a TU quadtree generally corresponds to a leaf-CU, while the root node of a CU quadtree generally corresponds to a treeblock (or LCU). TUs of the RQT that are not split are referred to as leaf-TUs. In general, this disclosure uses the terms CU and TU to refer to leaf-CU and leaf-TU, respectively, unless noted otherwise.

A video sequence typically includes a series of video frames or pictures. A group of pictures (GOP) generally comprises a series of one or more of the video pictures. A GOP may include syntax data in a header of the GOP, a header of one or more of the pictures, or elsewhere, that describes a number of pictures included in the GOP. Each slice of a picture may include slice syntax data that describes an encoding mode for the respective slice. Video encoder 20 typically operates on video blocks within individual video slices in order to encode the video data. A video block may correspond to a coding node within a CU. The video blocks may have fixed or varying sizes, and may differ in size according to a specified coding standard.

As an example, the HM supports prediction in various PU sizes. Assuming that the size of a particular CU is 2Nx2N, the HM supports intra-prediction in PU sizes of 2Nx2N or NxN, and inter-prediction in symmetric PU sizes of 2Nx2N, 2NxN, Nx2N, or NxN. The HM also supports asymmetric partitioning for inter-prediction in PU sizes of 2NxnU, 2NxnD, nLx2N, and nRx2N. In asymmetric partitioning, one direction of a CU is not partitioned, while the other direction is partitioned into 25% and 75%. The portion of the CU corresponding to the 25% partition is indicated by an "n" followed by an indication of "Up," "Down," "Left," or "Right." Thus, for example, "2NxnU" refers to a 2Nx2N CU that is partitioned horizontally with a 2Nx0.5N PU on top and a 2Nx1.5N PU on bottom.

In this disclosure, "NxN" and "N by N" may be used interchangeably to refer to the pixel dimensions of a video block in terms of vertical and horizontal dimensions, e.g., 16x16 pixels or 16 by 16 pixels. In general, a 16x16 block will have 16 pixels in a vertical direction (y = 16) and 16 pixels in a horizontal direction (x = 16). Likewise, an NxN block generally has N pixels in a vertical direction and N pixels in a horizontal direction, where N represents a nonnegative integer value. The pixels in a block may be arranged in rows and columns. Moreover, blocks may not necessarily have the same number of pixels in the horizontal direction as in the vertical direction. For example, blocks may comprise NxM pixels, where M is not necessarily equal to N.

Following intra-predictive or inter-predictive coding using the PUs of a CU, video encoder 20 may calculate residual data for the TUs of the CU. The PUs may comprise syntax data describing a method or mode of generating predictive pixel data in the spatial domain (also referred to as the pixel domain) and the TUs may comprise coefficients in the transform domain following application of a transform, e.g., a discrete cosine transform (DCT), an integer transform, a wavelet transform, or a conceptually similar transform to residual video data. The residual data may correspond to pixel differences between pixels of the unencoded picture and prediction values corresponding to the PUs. Video encoder 20 may form the TUs including the residual data for the CU, and then transform the TUs to produce transform coefficients for the CU.

Following any transforms to produce transform coefficients, video encoder 20 may perform quantization of the transform coefficients. Quantization is a broad term intended to have its broadest ordinary meaning. In one embodiment, quantization refers to a process in which transform coefficients are quantized to possibly reduce the amount of data used to represent the coefficients, providing further compression. The quantization process may reduce the bit depth associated with some or all of the coefficients. For example, an n-bit value may be rounded down to an m-bit value during quantization, where n is greater than m.

Video encoder 20 may further send syntax data, such as block-based syntax data, frame-based syntax data, and GOP-based syntax data, to video decoder 30, e.g., in a frame header, a block header, a slice header, or a GOP header. The GOP syntax data may describe a number of frames in the respective GOP, and the frame syntax data may indicate an encoding/prediction mode used to encode the corresponding frame.

### Example Video Encoder

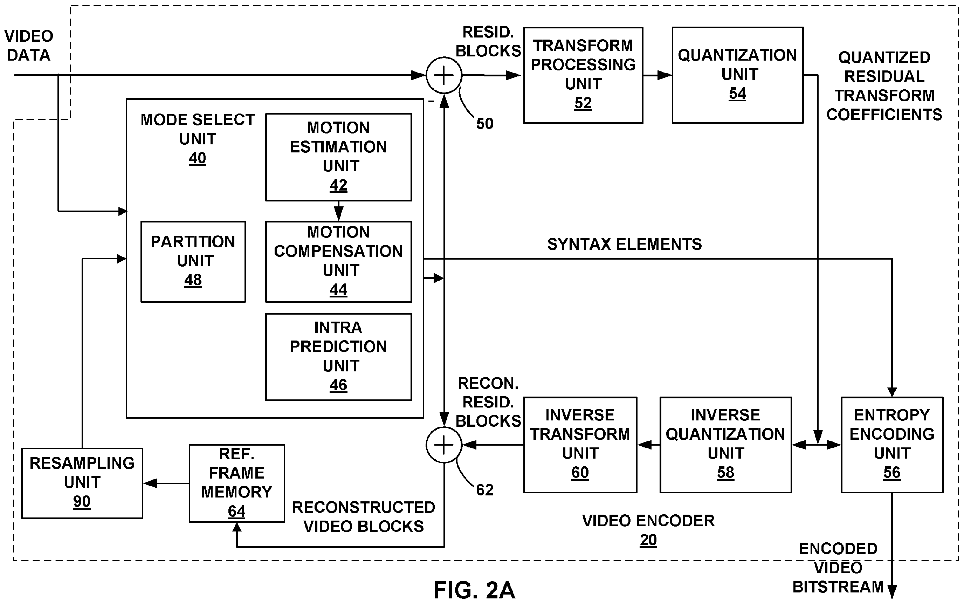

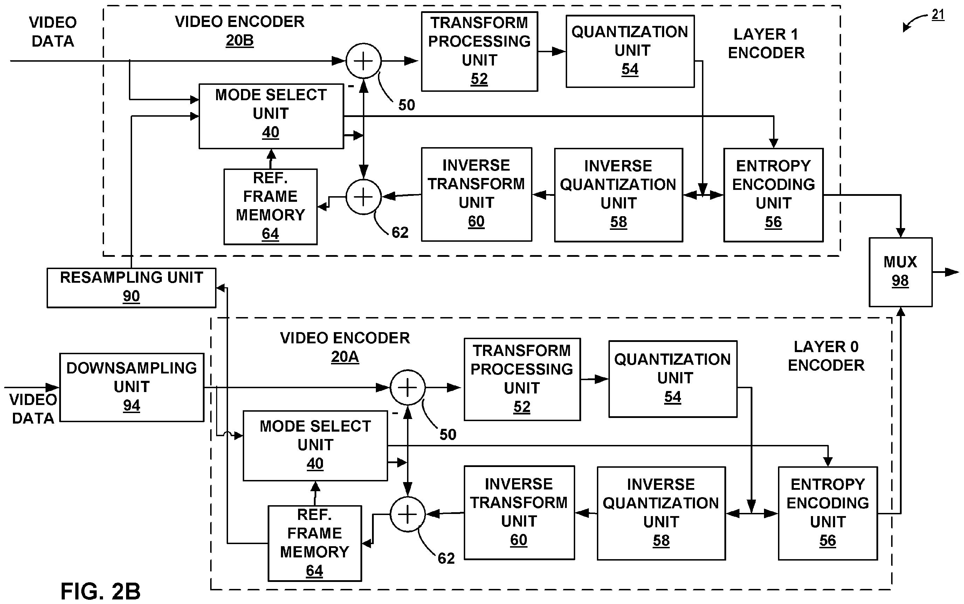

FIG. 2A is a block diagram illustrating an example of a video encoder 20 that may implement techniques in accordance with aspects described in this disclosure. The video encoder 20 may be configured to process a single layer of a video frame, such as for HEVC. Further, video encoder 20 may be configured to perform any or all of the techniques of this disclosure. The example depicted in FIG. 2A is for a single layer codec. However, as will be described further with respect to FIG. 2B, some or all of the video encoder 20 may be duplicated for processing of a multi-layer codec.

Video encoder 20 may perform intra- and inter-coding of video blocks within video slices. Intra-coding relies on spatial prediction to reduce or remove spatial redundancy in video within a given video frame or picture. Inter-coding relies on temporal prediction to reduce or remove temporal redundancy in video within adjacent frames or pictures of a video sequence. Intra-mode (I mode) may refer to any of several spatial based coding modes. Inter-modes, such as uni-directional prediction (P mode) or bi-prediction (B mode), may refer to any of several temporal-based coding modes.

As shown in FIG. 2, video encoder 20 receives a current video block within a video frame to be encoded. In the example of FIG. 2, video encoder 20 includes resampling unit 90, mode select unit 40, reference frame memory 64, summer 50, transform processing unit 52, quantization unit 54, and entropy encoding unit 56. Mode select unit 40, in turn, includes motion compensation unit 44, motion estimation unit 42, intra-prediction unit 46, and partition unit 48. For video block reconstruction, video encoder 20 also includes inverse quantization unit 58, inverse transform unit 60, and summer 62. A deblocking filter (not shown in FIG. 2) may also be included to filter block boundaries to remove blockiness artifacts from reconstructed video. If desired, the deblocking filter would typically filter the output of summer 62. Additional filters (in loop or post loop) may also be used in addition to the deblocking filter. Such filters are not shown for brevity, but if desired, may filter the output of summer 50 (as an in-loop filter).

During the encoding process, video encoder 20 receives a video frame or slice to be coded. The frame or slice may be divided into multiple video blocks. Resampling unit 90 may, in some cases, upsample a base layer of a received video frame to, for example, create an enhancement layer. The resampling unit 90 may upsample particular information associated with the received base layer of a frame, but not other information. For example, the resampling unit 90 may upsample the spatial size or number of pixels of the base layer, but the number of slices or the picture order count may remain constant. In some cases, the resampling unit 90 may not process the received video and/or may be optional. For example, in some cases, the mode select unit 40 may perform upsampling. In some embodiments, the resampling unit 90 is configured to upsample a layer and reorganize, redefine, modify, or adjust one or more slices to comply with a set of slice boundary rules and/or raster scan rules. For example, the resampling unit 90 may be configured to perform the methods described below with respect to Figures 4A-7. Although primarily described as updampling a base layer, or a lower layer in an access unit, in some cases, the resampling unit 90 may downsample a layer. For example, if during streaming of a video bandwidth is reduced, a frame may be downsampled instead of upsampled.

Motion estimation unit 42 and motion compensation unit 44 perform inter-predictive coding of the received video block relative to one or more blocks in one or more reference frames to provide temporal prediction. Intra-prediction unit 46 may alternatively perform intra-predictive coding of the received video block relative to one or more neighboring blocks in the same frame or slice as the block to be coded to provide spatial prediction. Video encoder 20 may perform multiple coding passes, e.g., to select an appropriate coding mode for each block of video data.

Moreover, partition unit 48 may partition blocks of video data into sub-blocks, based on evaluation of previous partitioning schemes in previous coding passes. For example, partition unit 48 may initially partition a frame or slice into LCUs, and partition each of the LCUs into sub-CUs based on rate-distortion analysis (e.g., rate-distortion optimization). In some embodiments, the partition unit 48 may be a prediction partition unit 48 that predicts a partition for a frame based on a reference frame, a reference picture list, a prior frame, and/or information associated with the frame itself. Mode select unit 40 may further produce a quadtree data structure indicative of partitioning of an LCU into sub-CUs. Leaf-node CUs of the quadtree may include one or more PUs and one or more TUs.

Mode select unit 40 may select one of the coding modes, intra or inter, e.g., based on error results, and provides the resulting intra- or inter-coded block to summer 50 to generate residual block data and to summer 62 to reconstruct the encoded block for use as a reference frame. Mode select unit 40 also provides syntax elements, such as motion vectors, intra-mode indicators, partition information, and other such syntax information, to entropy encoding unit 56.

Motion estimation unit 42 and motion compensation unit 44 may be highly integrated, but are illustrated separately for conceptual purposes. Motion estimation, performed by motion estimation unit 42, is the process of generating motion vectors, which estimate motion for video blocks. A motion vector, for example, may indicate the displacement of a PU of a video block within a current video frame or picture relative to a predictive block within a reference frame (or other coded unit) relative to the current block being coded within the current frame (or other coded unit). A predictive block is a block that is found to closely match the block to be coded, in terms of pixel difference, which may be determined by sum of absolute difference (SAD), sum of square difference (SSD), or other difference metrics. In some examples, video encoder 20 may calculate values for sub-integer pixel positions of reference pictures stored in reference frame memory 64. For example, video encoder 20 may interpolate values of one-quarter pixel positions, one-eighth pixel positions, or other fractional pixel positions of the reference picture. Therefore, motion estimation unit 42 may perform a motion search relative to the full pixel positions and fractional pixel positions and output a motion vector with fractional pixel precision.

Motion estimation unit 42 calculates a motion vector for a PU of a video block in an inter-coded slice by comparing the position of the PU to the position of a predictive block of a reference picture. The reference picture may be selected from a first reference picture list (List 0) or a second reference picture list (List 1), each of which identify one or more reference pictures stored in reference frame memory 64. Motion estimation unit 42 sends the calculated motion vector to entropy encoding unit 56 and motion compensation unit 44.

Motion compensation, performed by motion compensation unit 44, may involve fetching or generating the predictive block based on the motion vector determined by motion estimation unit 42. Again, motion estimation unit 42 and motion compensation unit 44 may be functionally integrated, in some examples. Upon receiving the motion vector for the PU of the current video block, motion compensation unit 44 may locate the predictive block to which the motion vector points in one of the reference picture lists. Summer 50 forms a residual video block by subtracting pixel values of the predictive block from the pixel values of the current video block being coded, forming pixel difference values, as discussed below. In general, motion estimation unit 42 performs motion estimation relative to luma components, and motion compensation unit 44 uses motion vectors calculated based on the luma components for both chroma components and luma components. Mode select unit 40 may also generate syntax elements associated with the video blocks and the video slice for use by video decoder 30 in decoding the video blocks of the video slice.

Intra-prediction unit 46 may intra-predict or calculate a current block, as an alternative to the inter-prediction performed by motion estimation unit 42 and motion compensation unit 44, as described above. In particular, intra-prediction unit 46 may determine an intra-prediction mode to use to encode a current block. In some examples, intra-prediction unit 46 may encode a current block using various intra-prediction modes, e.g., during separate encoding passes, and intra-prediction unit 46 (or mode select unit 40, in some examples) may select an appropriate intra-prediction mode to use from the tested modes.

For example, intra-prediction unit 46 may calculate rate-distortion values using a rate-distortion analysis for the various tested intra-prediction modes, and select the intra-prediction mode having the best rate-distortion characteristics among the tested modes. Rate-distortion analysis generally determines an amount of distortion (or error) between an encoded block and an original, unencoded block that was encoded to produce the encoded block, as well as a bitrate (that is, a number of bits) used to produce the encoded block. Intra-prediction unit 46 may calculate ratios from the distortions and rates for the various encoded blocks to determine which intra-prediction mode exhibits the best rate-distortion value for the block.

After selecting an intra-prediction mode for a block, intra-prediction unit 46 may provide information indicative of the selected intra-prediction mode for the block to entropy encoding unit 56. Entropy encoding unit 56 may encode the information indicating the selected intra-prediction mode. Video encoder 20 may include in the transmitted bitstream configuration data, which may include a plurality of intra-prediction mode index tables and a plurality of modified intra-prediction mode index tables (also referred to as codeword mapping tables), definitions of encoding contexts for various blocks, and indications of a most probable intra-prediction mode, an intra-prediction mode index table, and a modified intra-prediction mode index table to use for each of the contexts.

Video encoder 20 forms a residual video block by subtracting the prediction data from mode select unit 40 from the original video block being coded. Summer 50 represents the component or components that perform this subtraction operation. Transform processing unit 52 applies a transform, such as a discrete cosine transform (DCT) or a conceptually similar transform, to the residual block, producing a video block comprising residual transform coefficient values. Transform processing unit 52 may perform other transforms which are conceptually similar to DCT. Wavelet transforms, integer transforms, sub-band transforms or other types of transforms could also be used. In any case, transform processing unit 52 applies the transform to the residual block, producing a block of residual transform coefficients. The transform may convert the residual information from a pixel value domain to a transform domain, such as a frequency domain. Transform processing unit 52 may send the resulting transform coefficients to quantization unit 54. Quantization unit 54 quantizes the transform coefficients to further reduce bit rate. The quantization process may reduce the bit depth associated with some or all of the coefficients. The degree of quantization may be modified by adjusting a quantization parameter. In some examples, quantization unit 54 may then perform a scan of the matrix including the quantized transform coefficients. Alternatively, entropy encoding unit 56 may perform the scan.

Following quantization, entropy encoding unit 56 entropy codes the quantized transform coefficients. For example, entropy encoding unit 56 may perform context adaptive variable length coding (CAVLC), context adaptive binary arithmetic coding (CABAC), syntax-based context-adaptive binary arithmetic coding (SBAC), probability interval partitioning entropy (PIPE) coding or another entropy coding technique. In the case of context-based entropy coding, context may be based on neighboring blocks. Following the entropy coding by entropy encoding unit 56, the encoded bitstream may be transmitted to another device (e.g., video decoder 30) or archived for later transmission or retrieval.

Inverse quantization unit 58 and inverse transform unit 60 apply inverse quantization and inverse transformation, respectively, to reconstruct the residual block in the pixel domain, e.g., for later use as a reference block. Motion compensation unit 44 may calculate a reference block by adding the residual block to a predictive block of one of the frames of reference frame memory 64. Motion compensation unit 44 may also apply one or more interpolation filters to the reconstructed residual block to calculate sub-integer pixel values for use in motion estimation. Summer 62 adds the reconstructed residual block to the motion compensated prediction block produced by motion compensation unit 44 to produce a reconstructed video block for storage in reference frame memory 64. The reconstructed video block may be used by motion estimation unit 42 and motion compensation unit 44 as a reference block to inter-code a block in a subsequent video frame.

### Example Multi-Layer Video Encoder

FIG. 2B is a block diagram illustrating an example of a multi-layer video encoder 21 that may implement techniques in accordance with aspects described in this disclosure. The video encoder 21 may be configured to process multi-layer video frames, such as for SHVC and multiview coding. Further, the video encoder 21 may be configured to perform any or all of the techniques of this disclosure.

The video encoder 21 includes a video encoder 20A and video encoder 20B, each of which may be configured as the video encoder 20 and may perform the functions described above with respect to the video encoder 20. Further, as indicated by the reuse of reference numbers, the video encoders 20A, 20B may include at least some of the systems and subsystems as the video encoder 20. Although the video encoder 21 is illustrated as including two video encoders 20A, 20B, the video encoder 21 is not limited as such and may include any number of video encoder 20 layers. In some embodiments, the video encoder 21 may include a video encoder 20 for each picture or frame in an access unit. For example, an access unit that includes five pictures may be processed or encoded by a video encoder that includes five encoder layers. In some embodiments, the video encoder 21 may include more encoder layers than frames in an access unit. In some such cases, some of the video encoder layers may be inactive when processing some access units.

In addition to the video encoders 20A, 20B, the video encoder 21 may include a resampling unit 90 that is configured to receive a picture or frame (or picture information associated with the picture) from the reference frame memory 64 of the lower layer encoder (e.g., the video encoder 20A) and to resample the picture (or the received picture information). This resampled picture may then be provided to the mode select unit 40 of a higher layer encoder (e.g., the video encoder 20B) configured to encode a picture in the same access unit as the lower layer encoder. In some cases, the higher layer encoder is one layer removed from the lower layer encoder. In other cases, there may be one or more higher layer encoders between the layer 0 encoder and the layer 1 encoder of FIG. 2B. The resampling unit 90 of the video encoder 21 may include some or all of the embodiments described with respect to the resampling unit 90 of the video encoder 20. For example, the resampling unit 90 may be configured to upsample or downsample the picture received from the reference frame memory 64 of the video encoder 20A.

In some cases, the resampling unit 90 may be omitted or bypassed. In such cases, the picture from the reference frame memory 64 of the video encoder 20A may be provided directly, or at least without being provided to the resampling unit 90, to the mode select unit 40 of the video encoder 20B. For example, if video data provided to the video encoder 20B and the reference picture from the reference frame memory 64 of the video encoder 20A are of the same size or resolution, the reference picture may be provided to the video encoder 20B without resampling.

In some embodiments, the video encoder 21 downsamples video data to be provided to the lower layer encoder using the downsampling unit 94 before provided the video data to the video encoder 20A. Alternatively, the downsampling unit 94 may be a resampling unit 90 capable of upsampling or downsampling the video data. In yet other embodiments, the downsampling unit 94 may be omitted.

As illustrated in FIG. 2B, the video encoder 21 may further include a multiplexor 98, or mux. The mux 98 can output a combined bit stream from the video encoder 21. The combined bit stream may be created by taking a bit stream from each of the video encoders 20A, 20B and alternating which bit stream is output at a given time. While in some cases the bits from the two (or more in the case of more than two video encoder layers) bitstreams may be alternated a bit at a time, in many cases the bit streams are combined differently. For example, the output bit stream may be created by alternating the selected bit stream a block at a time. In another example, the output bit stream may be created by outputting a non 1:1 ratio of blocks from each video encoder 20A, 20B. For instance, two blocks may be output from the video encoder 20B for each block output from the video encoder 20A. In some embodiments, the output stream from the mux 98 may be preprogrammed. In other embodiments, the mux 98 may combine the bitstreams from the video encoders 20A, 20B based on a control signal received from a system external to the video encoder 21, such as from a processor on the source device 12. The control signal may be generated based on the resolution or bitrate of a video from the video source 18, based on a bandwidth of the computer-readable medium 16, based on a subscription associated with a user (e.g., a paid subscription versus a free subscription), or based on any other factor for determining a resolution output desired from the video encoder 21.

### Example Video Decoder

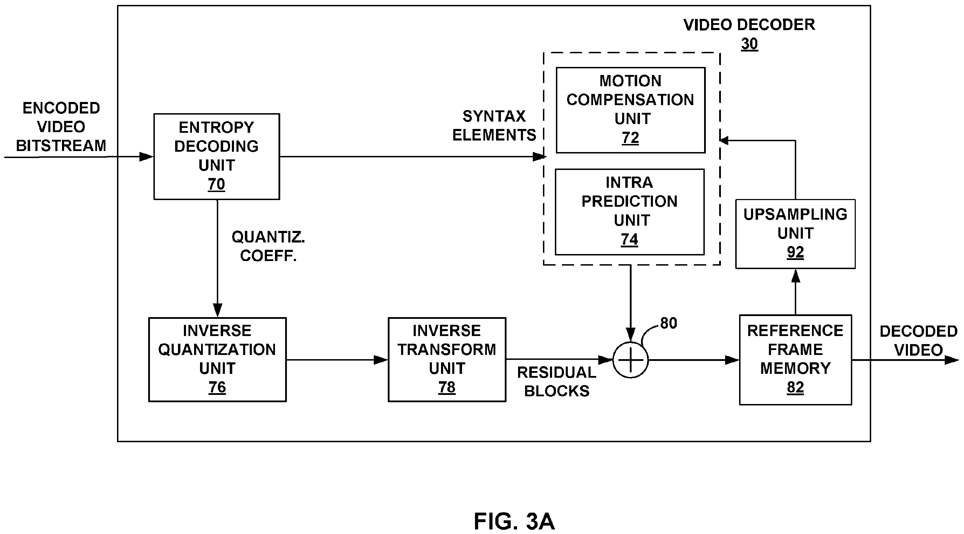

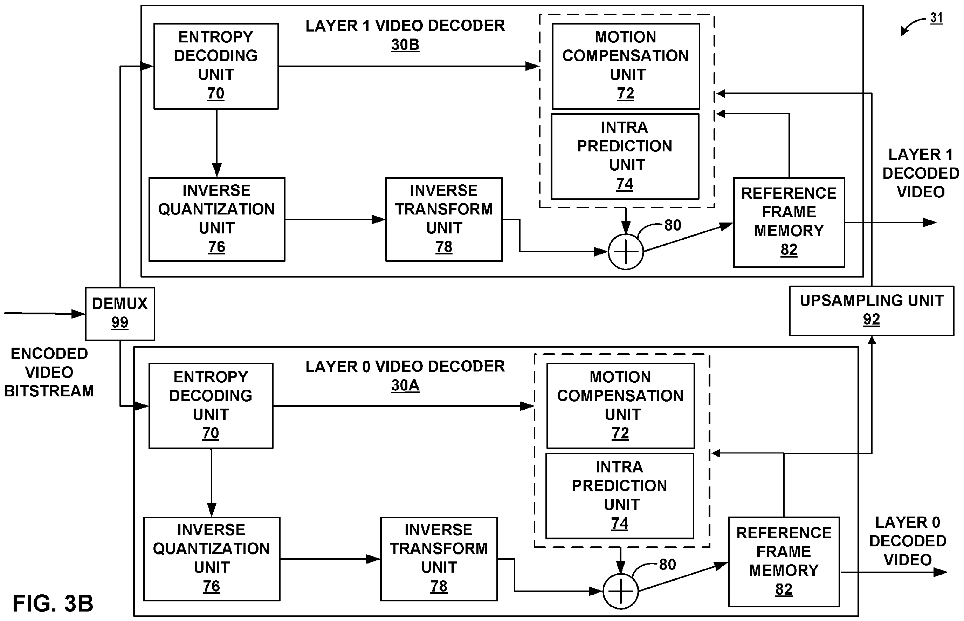

FIG. 3A is a block diagram illustrating an example of a video decoder 30 that may implement techniques in accordance with aspects described in this disclosure. The video decoder 30 may be configured to process a single layer of a video frame, such as for HEVC. Further, video decoder 30 may be configured to perform any or all of the techniques of this disclosure. The example depicted in FIG. 3A is for a single layer codec. However, as will be described further with respect to FIG. 3B, some or all of the video decoder 30 may be duplicated for processing of a multi-layer codec.

In the example of FIG. 3, video decoder 30 includes an upsampling unit 92, an entropy decoding unit 70, motion compensation unit 72, intra prediction unit 74, inverse quantization unit 76, inverse transformation unit 78, reference frame memory 82 and summer 80. Video decoder 30 may, in some examples, perform a decoding pass generally reciprocal to the encoding pass described with respect to video encoder 20 (FIG. 2). Motion compensation unit 72 may generate prediction data based on motion vectors received from entropy decoding unit 70, while intra-prediction unit 74 may generate prediction data based on intra-prediction mode indicators received from entropy decoding unit 70.

During the decoding process, video decoder 30 receives an encoded video bitstream that represents video blocks of an encoded video slice and associated syntax elements from video encoder 20. Entropy decoding unit 70 of video decoder 30 entropy decodes the bitstream to generate quantized coefficients, motion vectors or intra-prediction mode indicators, and other syntax elements. Entropy decoding unit 70 forwards the motion vectors and other syntax elements to motion compensation unit 72. Video decoder 30 may receive the syntax elements at the video slice level and/or the video block level.

When the video slice is coded as an intra-coded (I) slice, intra prediction unit 74 may generate prediction data for a video block of the current video slice based on a signaled intra prediction mode and data from previously decoded blocks of the current frame or picture. When the video frame is coded as an inter-coded (e.g., B, P or GPB) slice, motion compensation unit 72 produces predictive blocks for a video block of the current video slice based on the motion vectors and other syntax elements received from entropy decoding unit 70. The predictive blocks may be produced from one of the reference pictures within one of the reference picture lists. Video decoder 30 may construct the reference frame lists, List 0 and List 1, using default construction techniques based on reference pictures stored in reference frame memory 82.

In some embodiments, the upsampling unit 92 may upsample a base layer of a received video frame to create an enhanced layer to be added to the reference picture list for the frame or access unit. This enhanced layer can be stored at the reference frame memory 82. In some embodiments, the upsampling unit 92 can include some or all of the embodiments described with respect to the resampling unit 90. In some embodiments, the upsampling unit 92 is configured to upsample a layer and reorganize, redefine, modify, or adjust one or more slices to comply with a set of slice boundary rules and/or raster scan rules. For example, the upsampling unit 92 may be configured to perform the methods described below with respect to Figures 4A-7. In some cases, the upsampling unit 92 may be a resampling unit configured to upsample and/or downsample a layer of a received video frame.

Motion compensation unit 72 determines prediction information for a video block of the current video slice by parsing the motion vectors and other syntax elements, and uses the prediction information to produce the predictive blocks for the current video block being decoded. For example, motion compensation unit 72 uses some of the received syntax elements to determine a prediction mode (e.g., intra- or inter-prediction) used to code the video blocks of the video slice, an inter-prediction slice type (e.g., B slice, P slice, or GPB slice), construction information for one or more of the reference picture lists for the slice, motion vectors for each inter-encoded video block of the slice, inter-prediction status for each inter-coded video block of the slice, and other information to decode the video blocks in the current video slice.

Motion compensation unit 72 may also perform interpolation based on interpolation filters. Motion compensation unit 72 may use interpolation filters as used by video encoder 20 during encoding of the video blocks to calculate interpolated values for sub-integer pixels of reference blocks. In this case, motion compensation unit 72 may determine the interpolation filters used by video encoder 20 from the received syntax elements and use the interpolation filters to produce predictive blocks.

Inverse quantization unit 76 inverse quantizes, e.g., de-quantizes, the quantized transform coefficients provided in the bitstream and decoded by entropy decoding unit 80. The inverse quantization process may include use of a quantization parameter QPY calculated by video decoder 30 for each video block in the video slice to determine a degree of quantization and, likewise, a degree of inverse quantization that should be applied.

Inverse transform unit 78 applies an inverse transform, e.g., an inverse DCT, an inverse integer transform, or a conceptually similar inverse transform process, to the transform coefficients in order to produce residual blocks in the pixel domain.

After motion compensation unit 72 generates the predictive block for the current video block based on the motion vectors and other syntax elements, video decoder 30 forms a decoded video block by summing the residual blocks from inverse transform unit 78 with the corresponding predictive blocks generated by motion compensation unit 72. Summer 80 represents the component or components that perform this summation operation. If desired, a deblocking filter may also be applied to filter the decoded blocks in order to remove blockiness artifacts. Other loop filters (either in the coding loop or after the coding loop) may also be used to smooth pixel transitions, or otherwise improve the video quality. The decoded video blocks in a given frame or picture are then stored in reference picture memory or reference frame memory 82, which stores reference pictures used for subsequent motion compensation. Reference frame memory 82 also stores decoded video for later presentation on a display device, such as display device 32 of FIG. 1.

### Example Multi-Layer Decoder

FIG. 3B is a block diagram illustrating an example of a multi-layer video decoder 31 that may implement techniques in accordance with aspects described in this disclosure. The video decoder 31 may be configured to process multi-layer video frames, such as for SHVC and multiview coding. Further, the video decoder 31 may be configured to perform any or all of the techniques of this disclosure.

The video decoder 31 includes a video decoder 30A and video decoder 30B, each of which may be configured as the video decoder 30 and may perform the functions described above with respect to the video decoder 30. Further, as indicated by the reuse of reference numbers, the video decoders 30A, 30B may include at least some of the systems and subsystems as the video decoder 30. Although the video decoder 31 is illustrated as including two video decoders 30A, 30B, the video decoder 31 is not limited as such and may include any number of video decoder 30 layers. In some embodiments, the video decoder 31 may include a video decoder 30 for each picture or frame in an access unit. For example, an access unit that includes five pictures may be processed or decoded by a video decoder that includes five decoder layers. In some embodiments, the video decoder 31 may include more decoder layers than frames in an access unit. In some such cases, some of the video decoder layers may be inactive when processing some access units.

In addition to the video decoders 30A, 30B, the video decoder 31 may include an upsampling unit 92 that is configured to receive a picture or frame (or picture information associated with the picture) from the reference frame memory 82 of the lower layer decoder (e.g., the video decoder 30A) and to upsample the picture (or the received picture information). This upsampled picture may then be provided to the motion compensation unit 72 of a higher layer decoder (e.g., the video decoder 30B) configured to decode a picture in the same access unit as the lower layer decoder. In some cases, the higher layer decoder is one layer removed from the lower layer decoder. In other cases, there may be one or more higher layer decoders between the layer 0 decoder and the layer 1 decoder of FIG. 3B. The upsampling unit 92 of the video decoder 31 may include some or all of the embodiments described with respect to the upsampling unit 92 of the video decoder 30. For example, the upsampling unit 92 may be configured to upsample the picture received from the reference frame memory 82 of the video decoder 30A.

In some cases, the upsampling unit 92 may be omitted or bypassed. In such cases, the picture from the reference frame memory 82 of the video decoder 30A may be provided directly, or at least without being provided to the upsampling unit 92, to the motion compensation unit 72 of the video decoder 30B. For example, if video data provided to the video decoder 30B and the reference picture from the reference frame memory 82 of the video decoder 30A are of the same size or resolution, the reference picture may be provided to the video decoder 30B without upsampling. In some embodiments, the upsampled reference picture from the upsampling unit 92 may be provided to the intra prediction unit 74 of the video decoder 30B instead of or in addition to the motion compensation unit 72. Further, in some embodiments, the upsampling unit 92 may be a resampling unit 90 configured to upsample or downsample a reference picture received from the reference frame memory 82 of the video decoder 30A.

As illustrated in FIG. 3B, the video decoder 31 may further include a demultiplexor 99, or demux. The demux 99 can split an encoded video bitstream into multiple bitstreams with each bitstream output by the demux 99 being provided to a different video decoder 30A, 30B. The multiple bit streams may be created by receiving a bit stream and which video decoder 30A, 30B receives a portion of the bit stream at a given time. While in some cases the bits from the bitstream received at the demux 99 may be alternated a bit at a time between each of the video decoders (e.g., video decoders 30A and 30B in the example of the video decoder 30), in many cases the bit stream is divided differently. For example, the bitstream may be divided by alternating which video decoder receives the bitstream a block at a time. In another example, the bit stream may be divided by a non 1:1 ratio of blocks to each video decoder 30A, 30B. For instance, two blocks may be provided to the video decoder 30B for each block provided to the video decoder 30A. In some embodiments, the division of the bitstream by the demux 99 may be preprogrammed. In other embodiments, the demux 99 may divide the bitstream based on a control signal received from a system external to the video decoder 31, such as from a processor on the destination device 14. The control signal may be generated based on the resolution or bitrate of a video from the input interface 28, based on a bandwidth of the computer-readable medium 16, based on a subscription associated with a user (e.g., a paid subscription versus a free subscription), or based on any other factor for determining a resolution obtainable by the video decoder 31.

### First Example Upsampled Base Layer

FIGs. 4A-4C illustrate a first example of generating an upsampled layer (e.g., an upsampled base layer) that may be included in a reference picture list, may be used to generate an enhancement layer, and/or may be used in any other process that utilizes an upsampled layer. In the examples of FIGs. 4A-4C, the depicted frames may represent the same frame, but not necessarily the same layer within the frame. In other words, the depicted frames may be part of the same access unit. The layer 402 illustrated in FIG. 4A may represent a base layer of the frame. However, in other cases, the layer may be any other layer, such as one of a number of enhancement layers.

As illustrated in FIG. 4A, the layer 402 may include a number of slices 404A, 406A. The division between the two slices may be identified from the slice border 430A between the two slices 404A, 406A. The slice border 430A can be distinguished from the grid lines dividing the frame into coding units by the increased thickness of the slice border 430A compared to the grid lines.

Each of the slices may be associated with slice-specific information and/or syntax information specific to the slice. This slice information may be included in a slice header for each slice 404A, 406A or may be stored elsewhere and associated with the slice, such as via a mapping table or other data structure. The slice information may include any type of information that can be associated with a slice, such as picture order count, colour plane, address of the first coding tree block in the slice, etc. This slice information may be defined by the HEVC standard. However, the slice information is not limited as such and may include other standards-based information and/or application-specific information, which may or may not be associated with a particular standard.

The layer 402 may be divided into a number of coding units or coding tree units (CTUs) as indicated by the grid lines. The coding units may be of varying pixel sizes. For example, the coding units may be 16x16 pixels or 64x64 pixels. In some cases, the coding units may be referred to as largest coding units (LCUs). The slices 404A, 406A may include a number of LCUs. In the depicted example, the slice 404A includes 5 LCUs and the slice 406A includes 11 LCUs. Although each block or CTU of the layer 402 is depicted as being equivalently sized, in some embodiments, CTUs may of the layer 402 may vary in size.

Generally, the layer 402 may represent a base layer. However, the layer 402 is not limited as such. In some cases, the layer 402 may be any layer included in the same access unit as the layer 412 described below.

FIG. 4B depicts an upsampled version of the layer 402, layer 412. Layer 412 may represent a reference layer or a reference picture that can be included in a reference picture list associated with the corresponding base layer (e.g., the layer 402). This upsampled layer 412 may, in some cases, be used to generate an enhancement layer. Further, the layer 412 may be an inter-layer reference picture that is associated with the same access unit and/or time point as the layer 402. As illustrated in FIG. 4B, the layer 412 represents an upsampling of layer 402 by 2x, or a dyadic upsampling. In some cases, upsampling may include scaling. For example, each box or coding unit within layer 412 can be 2x as long and 2x as wide as each box or coding unit in layer 402 when 2x upsampling is applied. In other cases, each box or coding unit of the upsampled layer 412 may be the same size as the boxes or coding units in the layer 402. In some cases, the upsampling is restricted to a specific scale, such as an integer scale (e.g., 2x, 3x, 5x, etc.). In other cases, the upsampling may be unrestricted and may include non-integer based upsampling (e.g., 1.5x, 3.3x, etc.). Further, although embodiments herein are primarily described using upsampling, some embodiments may include downsampling (e.g., 0.5x).

As with the layer 402, the layer 412 may be divided into a number of slices 404B, 406B. The division between the two slices may be identified from the slice border 430B between the two slices 404B, 406B. These slices 404B, 406B may correspond to the slices of the layer from which the layer 412 was upsampled, which in the illustrated example is layer 402. Thus, in the example of FIG. 4B, slice 404B corresponds to slice 404A and includes as least some of the same slice information as 404A, and slice 406B corresponds to slice 406A and includes as least some of the same slice information as 406A. Further, the slice border 430B may divide the layer 412 in a manner corresponding to how the slice border 430A divides the layer 402. Therefore, the slice 404B may include a proportionally equal number of LCUs as the slice 404A and the slice 406B may include a proportionally equal number of LCUs as the slice 406A. For example, the slices 404A and 406A may be upsampled proportionately to the upsampling of the layer 402 such that the spatial scale between upsampled slices 404B, 406B and base layer slices 404A, 406Ais the same as the scale between the upsampled reference layer 412 and the base layer 402.

It is often desirable, and in some cases required, that the LCUs of a frame are accessed in a raster scan order, for example, from left to right and from top to bottom. Further, it is often desirable, and in some cases required, that a slice is processed in its entirety before processing another slice. These requirements are sometimes referred to as raster scan processing rules. Other rules may also be included in raster scan processing rule sets. Satisfying raster scan processing rules is often desirable, if not required, so that subsystems (e.g., coding/decoding systems or processors) may function with pre-existing systems. In other words, an encoder that does not satisfy raster scan processing rules may not be operable with existing image processing systems. The layer 412 does not satisfy raster scan processing rules because, for example, However, the layer 412 obtained from upsampling the layer 402 does not allow for the slice 404B to be processed (e.g., encoded, decoded, etc.) in its entirety before processing the slice 406B while maintaining processing in raster scan order. In other words, processing the third row of LCUs of the layer 412 in raster scan order would result in the first row of blocks of the slice 406B being processed before the slice 404B is completely processed.

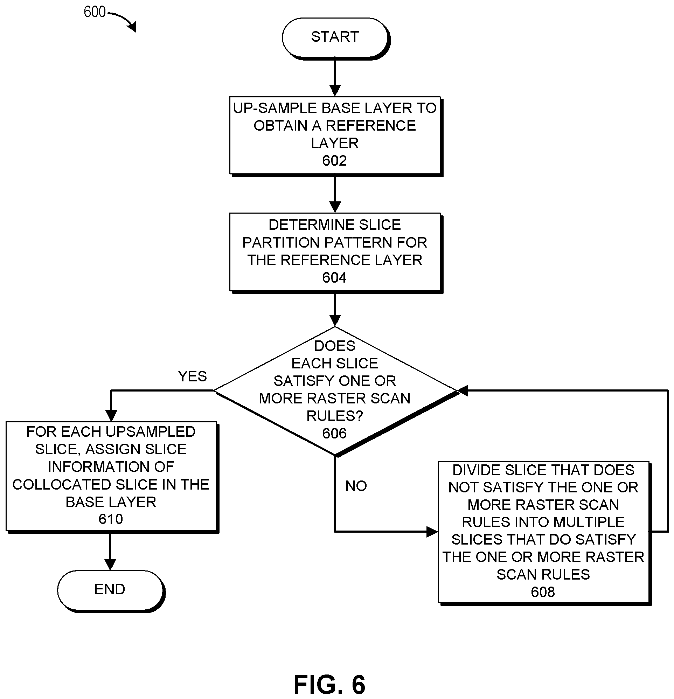

In certain embodiments, slices may be redefined to facilitate processing the upsampled layer 412 in raster scan order and to cause each slice to be processed wholly before processing a subsequent slice. FIG. 4C illustrates an example of modifying the layer 412 to obtain the layer 422, which satisfies the raster scan processing rules. In the example of FIG. 4C, the slices of layer 412 are divided to create two new slices in the layer 422. In other words, the slices of the layer 422 are redefined such that each slice may be processed in its entirety in raster scan order. Further, slice information included in the slice header of the corresponding slice from layer 412 may be associated with the slices of layer 422. Thus, slice 440A may include at least some of the slice information included in the slice 404B and slice 440B may include at least some of the slice information included in the slice 404B. Likewise, slice 442A may include at least some of the slice information included in the slice 406B and slice 442B may include at least some of the slice information included in the slice 406B. Further, in some cases, the slice 440A and 440B may include the same slice information in their respective slice headers. The process for upsampling the layer 402 and redefining the slices of the upsampled version of the layer 402 is described in more detail with respect to FIG. 6.

### Second Example Upsampled Base Layer

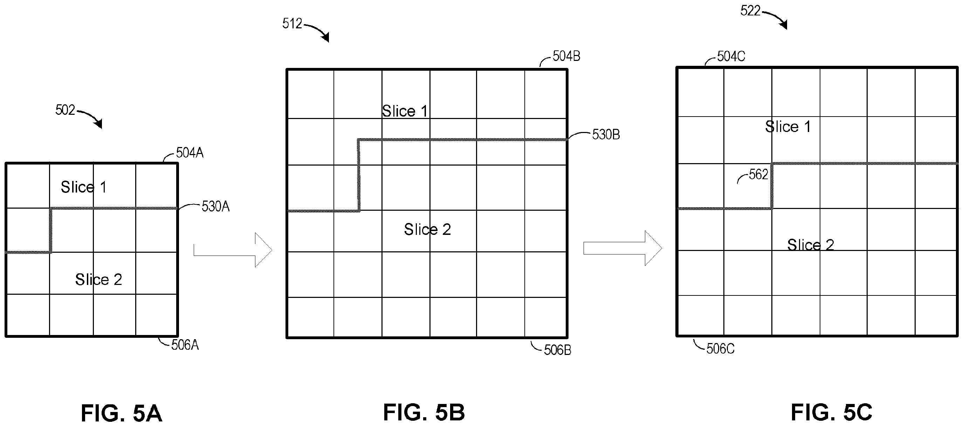

FIGs. 5A-5C illustrate a second example of generating an upsampled layer (e.g., an upsampled base layer) that may be included in a reference picture list, may be used to generate an enhancement layer, and/or may be used in any other process that utilizes an upsampled layer. In the examples of FIGs. 5A-5C, the depicted frames may represent the same frame, but not necessarily the same layer within the frame. In other words, the depicted frames may be part of the same access unit. The layer 502 illustrated in FIG. 5A may represent a base layer of the frame. However, in other cases, the layer may be any other layer, such as one of a number of enhancement layers. In some cases, the reference layer may be used as an enhancement layer or to derive an enhancement layer.

As illustrated in FIG. 5A, the layer 502 may include a number of slices 504A, 506A. The division between the two slices may be identified from the slice border 530A between the two slices 504A, 506A. As previously described with respect to FIGs. 4A-4C, each of the slices 504A, 506A may be associated with slice-specific information and/or syntax information that may be in a slice header or a data structure associated with each slice. Further, as described with respect to FIGs. 4A-4C, each slice 504A, 506A may consist of one or more LCUs.

FIG. 5B depicts an upsampled version of the layer 502, layer 512. Layer 512 may represent a reference layer that can be included in a reference picture list associated with the corresponding base layer (e.g., the layer 502). Further, the layer 512 may be an inter-layer reference picture that is included in the same access unit and/or time point as the layer 502. As illustrated in FIG. 5B, the layer 512 represents an upsampling of layer 502 by 1.5x. Further, as described above with respect to FIG. 4B, the layer 502 may be upsampled based on a restricted set of upsampling options. Alternatively, the layer 502 may be upsampled by any rate. Moreover, the layer 502 may, in some cases, be downsampled.

Much like the layer 502, the layer 512 may be divided into a number of slices 504B, 506B. The division between the two slices may be identified from the slice border 530B. In some cases, the slices 504B, 506B correspond to the slices 504A, 506A, respectively, of the layer 502. Generally, the slices 504B, 506B share at least a portion of the slice information from the corresponding slices 504A, 506A. Further, as with slice border 430B, the slice border 530B may divide the layer 512 in a manner corresponding to how the slice border 530A divides the layer 502. Thus, for example, the slice 504B may include an equal percentage of the total layer 512 as the slice 504A does of the layer 502. In certain embodiments, upsampling the layer 502 may result in the slice border 530B dividing at least some of the LCUs into fractions as illustrated in FIG. 5B.

As previously discussed, it is often desirable for a slice to be processed in its entirety before processing another slice. Further, it is desirable to process the slices in raster scan order. In addition, it is often desirable that a slice comprise whole LCUs. One reason for a slice to be defined by whole LCUs, and not partial LCUs, is to prevent multiple slices from accounting for the LCU in its slice header. In certain embodiments, it is desirable for blocks to not be split between LCUs because some processing operations, such as some intra prediction operations, include determining whether a neighbor block shares an LCU. When blocks are divided across a slice boundary, it can be difficult to identify which block is a neighbor and/or whether a neighbor block shares a slice with a block being processed. Further, by ensuring that blocks are not divided by a slice boundary, decoding and encoding may in some cases be performed using less processing resources. Further, to more efficiently code video information, it is desirable that the video information satisfy raster scan processing rules including, in some cases, processing each block in its entirety in a raster scan order.

In certain embodiments, slices may be redefined to include entire or whole LCUs without including partial LCUs. Redefining a slice may include rounding up or annexing a portion of an LCU not included in the slice so that the slice includes the entire LCU block. Alternatively, redefining the slice may include rounding down or excluding a partial LCU included in the slice. In some cases, redefining a slice may include a combination of annexing a portion of an LCU and excluding a portion of another LCU. Further, in certain cases, the slice may be redefined in a manner that minimizes the number of changes to the slices while satisfying raster scan processing rules.

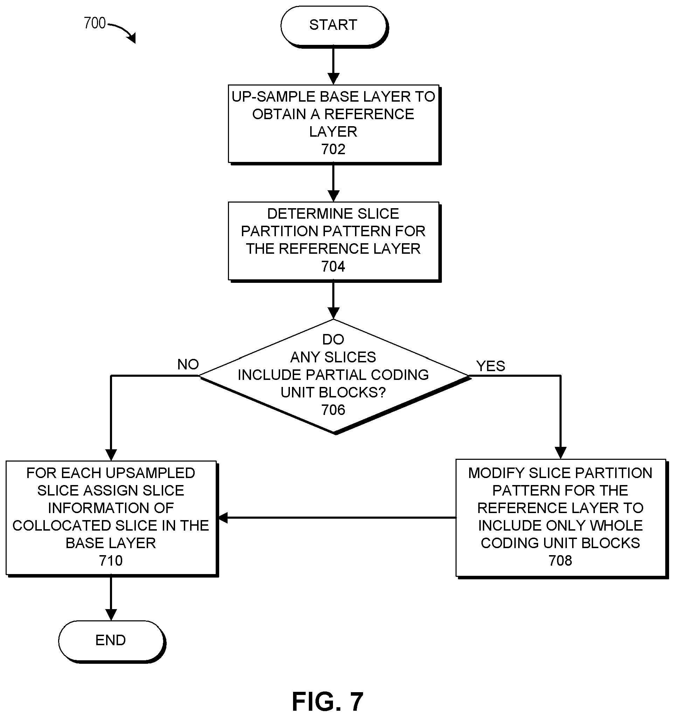

FIG. 5C illustrates an example of modifying the layer 512 to obtain the layer 522, which includes only whole LCUs. The slices of the layer 522 are redefined such that each slice includes only complete or entire LCUs. Further, slice information included in the slice header of the corresponding slice from layer 512 may be associated with the slices of layer 522. Thus, slice 504C may include at least some of the slice information included in the slice 504B. Likewise, slice 506C may include at least some of the slice information included in the slice 506B. Further, in some cases, some of the slices of the layer 522 may be proportionally larger or smaller than corresponding slices of the layer 512. For instance, in the illustrated example, slice 504C is larger than 504B, but slice 506C is smaller than 506B. The process for upsampling the layer 502 and redefining the slices of the upsampled version of layer 502 is described in more detail with respect to FIG. 7.

In the example of FIG. 5C, the slices were modified by moving the slice border 530B of the layer 512 down and to the right in the layer 522. However, in some cases, it is possible to adjust the slice border 530B in other ways. For example, the slice border 530B may have been moved down and to the left such that the LCU 562 is included in slice 506C instead of slice 504C. In some cases, the slice border 530B and/or the slices may be modified to minimize changes in coding unit association. Alternatively, or in addition, the slice border 530B and/or the slices may be modified to get the slices closer to equal size. In some cases, the slice border 530B and/or the slices may be modified such that a particular slice is the largest slice, the smallest slice, or is proportional to some other slice. In other cases, the slice border 530B and/or the slices may be modified such that only portions of the slice border 530B that intersect an LCU such that the LCU is not wholly included in a single slice are modified.

It should be noted that although FIGs. 4A-4C and 5A-5C are described as two separate examples for redefining slices of a reference layer for two separate purposes, the two examples may be combined. In other words, slices of a reference layer may be modified to include only whole LCU blocks, and slices may be further divided to maintain raster scan order processing. Thus, the processes described below with respect to FIGs. 6 and 7 may be combined and/or performed with respect to the same frame and/or access unit. Further, although the examples have primarily been described using upsampling, it is to be understood that the systems and processes described herein can be adapted for use when downsampling a picture or frame.

### First Example Process for Upsampling a Base Layer

FIG. 6 presents a flowchart illustrating a first example of a process 600 for generating a reference layer from an upsampled base layer. The process 600 can be implemented by any system that can upsample a layer. For example, the process 600, in whole or in part, can be implemented by a video encoder 20, a video decoder 30, an resampling unit 90, a motion estimation unit 42, a motion compensation unit 44, an intra prediction unit 46, a partition unit 48, an upsampling unit 92, a motion compensation unit 72, and a intra prediction unit 74, to name a few. Although any number of systems, in whole or in part, can implement the process 600, to simplify discussion, the process 600 will be described with respect to particular systems. In some cases, the system can upsample the layer for use in creating an enhancement layer picture from a base layer.

The process 600 begins at block 602 where, for example, the resampling unit 90, or other unit, upsamples a base layer of a frame, or access unit, to obtain a reference layer for the frame. As previously described, the base layer may be upsampled by any ratio, such as 1.5x, 2x, 3x, etc. Further, the base layer may be downsampled in some cases. Upsampling the base layer may include upsampling one or more of the scale or spatial resolution of the base layer, the luminance and chrominance (or YUV) data of the layer, motion parameters for the layer, and any other data of a layer that may be upsampled. Additional embodiments for upsampling a layer are described in U.S. Application No. 14/035,129, filed September 24, 2013 and titled "PREDICTION MODE INFORMATION UPSAMPLING FOR SCALABLE VIDEO CODING," which is hereby incorporated by reference in its entirety.

Although the embodiments described herein have primarily been described with respect to upsampling the base layer of a frame, embodiments of the present disclosure may be applied to other layers of the frame. For example, an enhancement layer may be upsampled to obtain a reference layer, which may in some cases be used to generate another enhancement layer for the frame.

At block 604, the partition unit 48, or other unit, determines a slice partition pattern for the reference layer generated at the block 602. Determining the slice partition pattern may include accessing one or more slice headers associated with the reference layer. Alternatively, or in addition, determining the slice partition pattern may include accessing metadata associated with the reference layer. This metadata may be stored with the reference layer and/or at a data structure configured to store metadata for one or more layers and/or frames.

The partition unit 48, or other unit, at decision block 606, determines whether each slice satisfies a raster scan pattern. Generally, to satisfy a raster scan pattern, the slice is configured to be processed in a horizontal order from left to right and line by line from top to bottom. However, the disclosure is not limited as such, and other patterns are possible. For example, slices may be configured vertically instead of horizontally, and each slice may be processed from top to bottom (or vice versa) and from left to right (or vice versa). As a second example, one set of alternate scan lines may be processed from left to right and a second set of alternate scan lines may be processed from right to left. As a third example, LCUs may be processed in diagonal scan order. Regardless of the specific raster scan pattern utilized, a slice is generally processed in its entirety before another slice is processed when utilizing raster scan based processing. However, in some embodiments, a plurality of slices may be processed at least partially in parallel. For example, in multi-processor based systems, at least some slices may be processed in parallel.

Determining whether each slice satisfies a raster scan pattern may include accessing a slice header associated with each slice. In some cases, determining whether each slice satisfies a raster scan pattern may include determining whether a height of the slice measured by the number of blocks, or LCUs, in the tallest column of the slice is no greater than one block, or LCU, more than the height of the shortest column of the slice. As illustrated in FIG. 4B, if horizontal scanning is applied, neither slice 404B nor slice 406B will satisfy the raster scan pattern as a height disparity between columns of each slice is greater than one. In other words the difference between the height of column 1 or column 2 (e.g., HT1) and column 3 or subsequent columns (e.g., HT2) is two LCUs. However, the slices of the layer 422 do satisfy the raster scan pattern. Although height is used in the above example, length may be used in other embodiments. Generally, height may be measured in units of LCU blocks. However, in some embodiments, height may be measured by other units, such as number of pixels. In such embodiments, determining whether each slice satisfies a raster scan pattern may include determining whether a height disparity between columns is no more than the height of a single row that is processed using a raster scan pattern.

Further, in some cases, the block 606 may determine whether each slice satisfies a raster scan pattern by determining whether a slice includes more than one incomplete scan line. An incomplete scan line may include a number of LCUs that is less than the total number of LCUs that can be included in a row of a layer divided into LCUs. In some instances, the decision block 606 may analyze each slice one at a time or may analyze some or all of the slices in parallel.

If the partition unit 48, or other unit, determines at the decision block 606 that at least one of the slices does not satisfy a raster scan pattern, the unit divides the at least one slice that does not satisfy the raster scan pattern into multiple slices that do satisfy the raster scan pattern at block 608. The block 608 may include dividing the at least one slice into two or more slices based on the pattern of the slice to be provided. As previously indicated, the slice pattern may be determined based on a slice header associated with slice. The slice is divided at block 608 so as to satisfy a raster scan pattern for the newly created sub-slices. One example of dividing a slice into multiple slices to satisfy a raster scan pattern is illustrated in FIG. 4C.

As illustrated in FIG. 6, after completing the process associated with the block 608, the process 600 may return to the decision block 606 where the partition unit 48 may determine whether the updated slice partition pattern for the reference layer satisfies the raster scan pattern. Alternatively, the process 600 may proceed to the block 610 after completing the block 608.

If at the decision block 606 the partition unit 48 determines that each slice of the reference layer does satisfy raster scan pattern, the process 600 proceeds to block 610. At the block 610, for each slice of the reference layer, the partition unit 48, or other unit, assigns or associates slice information of a co-located slice in the base layer to the slice of the reference layer. Assigning or associating the slice information of a co-located slice to a corresponding slice of the reference layer may include configuring a slice header of the corresponding slice the reference layer to include at least some of the information from a slice header of the co-located slice in the base layer.

In some embodiments, the partition unit 48, or other unit, may add the reference layer to a reference picture list for the frame. In some embodiments, the reference picture list may be used to facilitate encoding and/or decoding the frame. Alternatively, or in addition, the reference picture list may be used to generate an enhancement layer.

### Second Example Process for Upsampling a Base Layer

FIG. 7 presents a flowchart illustrating a second example of a process 700 for generating a reference layer from an upsampled base layer. The process 700 can be implemented by any system that can upsample a layer. For example, the process 700, in whole or in part, can be implemented by a video encoder 20, a video decoder 30, an resampling unit 90, a motion estimation unit 42, a motion compensation unit 44, an intra prediction unit 46, a partition unit 48, an upsampling unit 92, a motion compensation unit 72, and a intra prediction unit 74, to name a few. Although any number of systems, in whole or in part, can implement the process 700, to simplify discussion, the process 700 will be described with respect to particular systems. In some cases, the system can upsample the layer for use in creating an enhancement layer picture from a base layer.

The process 700 begins at block 702 where, for example, the resampling unit 90 upsamples a base layer of a frame, or access unit, to obtain a reference layer for the frame. In certain embodiments, the block 702 may include some or all of the embodiments described with respect to the block 602. For instance, the block 702 may include upsampling an enhancement layer to obtain a reference layer, which in some cases may be used to create another enhancement layer for the frame.

At block 704, the partition unit 48, or other unit, determines a slice partition pattern for the reference layer generated at the block 702. Similar to the block 702, the block 704 may include some or all of the embodiments described with respect to the block 604. For instance, the block 704 may include determining the slice partition pattern by accessing one or more slice headers associated with the reference layer.

At decision block 706, the partition unit 48, or other unit, determines whether any of the slices of the reference layer includes a partial coding unit block. In certain embodiments, the decision block 706 may include one or more of the embodiments previously described with respect to the block 606. For example, the decision block 706 may determine whether a slice include a partial coding unit block by accessing a slice header associated with the slice. Further, in some embodiments, determining whether any of the slices of the reference layer includes a partial coding unit block includes determining whether the slices satisfy a raster scan pattern. Further, determining whether any of the slices of the reference layer includes a partial coding unit block may include determining whether a slice border (e.g., the slice border 530B) intersects with an LCU such that the LCU is partially included in multiple slices (e.g., as illustrated in FIG. 5B).

If the partition unit 48 determines that a slice does include a partial coding unit block, the partition unit 48, or other unit, modifies a slice partition pattern for the reference layer to include only whole coding unit blocks at block 708. The process associated with the block 708 may include expanding or modifying a slice such that one or more partial coding unit blocks of the slice become fully encompassed within the slice. Further, the process associated with the block 708 may include reducing or modifying a slice such that one or more partial coding unit blocks of the slice are excluded from the slice. One example of modifying a slice to include only whole coding unit blocks is illustrated in FIG. 5C.

Although not illustrated, in some cases, the block 708 may proceed back to decision block 706 to determine whether the updated slice partitions and/or any additional slices include any partial coding unit blocks.

If the partition unit 48 determines that no slices include a partial coding unit block, the process 700 proceeds to block 710. In addition, the process 700 may proceed to block 710 subsequent to completion of the block 708 with respect to at least one slice. At the block 710, for each slice of the reference layer, the partition unit 48 assigns slice information of a co-located slice in the base layer to the slice of the reference layer. Assigning the slice information of a co-located slice to a corresponding slice of the reference layer may include configuring a slice header of the corresponding slice of the reference layer to include at least some of the information from a slice header of the co-located slice in the base layer.

In some embodiments, the partition unit 48, or other unit, may add the reference layer to a reference picture list for the frame. In some embodiments, the reference picture list may be used to facilitate encoding and/or decoding the frame. Alternatively, or in addition, the reference picture list may be used to generate an enhancement layer.

Although the processes 600 and 700 are described independently, in some embodiments, the processes 600 and 700 may be combined. For example, the block 606 and 706 may be performed, at least in part, as part of the same operation, concurrently, or in sequence. Further, the blocks 608 and 708 may be performed, at least in part, as part of the same operation, concurrently, or in sequence. For example, the block 708 may include modifying slice partition pattern for the reference layer to include only whole coding unit blocks while satisfying raster scan processing rules, which may include performing the process associated with the block 608 to divide one or more slices into additional slices.

### Terminology

It is to be recognized that depending on the example, certain acts or events of any of the techniques described herein can be performed in a different sequence, may be added, merged, or left out altogether (e.g., not all described acts or events are necessary for the practice of the techniques). Moreover, in certain examples, acts or events may be performed concurrently, e.g., through multi-threaded processing, interrupt processing, or multiple processors, rather than sequentially.

In one or more examples, the functions described may be implemented in hardware, software, firmware, or any combination thereof. If implemented in software, the functions may be stored on or transmitted over as one or more instructions or code on a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules configured for encoding and decoding, or incorporated in a combined codec. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware.

Various examples have been described. These and other examples are within the scope of the following claims.

## Claims

1. A method of coding video information, the method comprising:
resampling video information of a reference picture of a picture to be encoded to obtain a resampled picture, the reference picture having a plurality of slices and having a different picture size than the picture to be encoded;
determining (604) slice definitions for a plurality of resampled slices in the resampled picture, the plurality of slices of the resampled picture corresponding in number and relative location to a plurality of slices of the reference picture;
determining (606), based at least partially on the slice definitions, whether each of the plurality of slices of the resampled picture satisfies one or more slice partition rules and **characterized in that**:
in response to determining (608) that at least one of the plurality of slices of the resampled picture does not satisfy at least one slice partition rule, modifying slice partitions for at least some of the plurality of slices in the resampled picture that do not satisfy the at least one slice partition rule to satisfy the at least one slice partition rule.

2. The method of claim 1, wherein said determining comprises determining whether each of the plurality of slices of the resampled picture satisfies the one or more slice partition rules by determining whether a slice from the plurality of slices in the resampled picture includes a disparity between a height of the slice in a first column and a height of the slice in a previous column that is greater than one largest coding unit (LCU) and/or wherein said determining comprises determining whether each of the plurality of slices of the resampled picture satisfies the one or more slice partition rules by determining whether a slice from the plurality of slices in the resampled picture includes more than one incomplete scan line.

3. The method of claim 1, wherein said determining comprises determining whether each of the plurality of slices of the resampled picture satisfies the one or more slice partition rules by determining whether a slice from the plurality of slices in the resampled picture includes a partial LCU and preferably wherein said modifying comprises rounding the partial LCU and further preferably wherein rounding the partial LCU comprises modifying the slice partition for at least one slice of the plurality of slices in the resampled picture that includes the partial LCU to remove the partial LCU from the slice partition and/or wherein rounding the partial LCU comprises modifying the slice partition for at least one slice of the plurality of slices in the resampled picture that includes the partial LCU to include the entire LCU corresponding to the partial LCU in the slice partition.

4. The method of claim 1, wherein said modifying comprises dividing at least one slice of the plurality of slices into multiple sub-slices and preferably wherein, for at least some sub-slices of the multiple sub-slices, the method further comprises associating at least some of the information included in a slice header of the at least one slice of the plurality of slices in the resampled picture with a slice header of the sub-slice.

5. The method of claim 1, wherein the reference picture is a reference picture for a single layer video codec.

6. The method of claim 5, further comprising adding the resampled picture to a reference picture list for the picture to be encoded and/or further comprising using the resampled reference picture as a collocated picture for temporal motion vector derivation.

7. The method of claim 1, wherein the reference picture is a reference picture from a lower layer than the picture to be encoded in a multi-layer video codec.

8. The method of claim 7, further comprising using the resampled picture to perform inter layer prediction and/or further comprising adding the resampled picture to a reference picture list for the picture to be encoded and/or further comprising using the resampled reference picture as a collocated picture for temporal motion vector derivation.

9. The method of claim 1, further comprising encoding the picture to be encoded using the resampled picture and/or further comprising decoding an encoded copy of the picture using the resampled layer and/or further comprising associating each block in the resampled picture with a slice header of the slice which includes the collocated block in the reference picture and preferably wherein the block size is 16x16.

10. Non-transitory computer-readable storage media having instructions stored thereon that when executed cause an apparatus comprising at least one processor to execute the method of any one of claims 1 to 9.

11. An apparatus (30, 31) configured to code video information, the apparatus comprising:
means for storing video information associated with a picture;
means for resampling video information of the picture to obtain a resampled picture, the picture having a plurality of slices;
means for determining slice definitions for a plurality of slices of the resampled picture, the plurality of slices of the resampled picture corresponding in number and relative location to the plurality of slices of the picture;
means for determining, based at least partially on the slice definitions, whether each of the plurality of slices of the resampled picture satisfies one or more slice partition rules and **characterized by**:
means for modifying slice partitions for at least some of the plurality of slices of the resampled picture in response to determining that at least one of the plurality of slices of the resampled picture does not satisfy at least one of the one or more slice partition rules.

12. The apparatus of claim 11, wherein at least two of the said means for storing video information, means for resampling, means for determining slice definitions, means for determining, and means for modifying comprise the same means.

13. The apparatus of claim 11, wherein said means for determining is further configured to determine whether each of the plurality of slices of the resampled picture satisfies the one or more slice partition rules by determining whether a slice from the plurality of slices of the resampled picture includes a partial LCU.

14. The apparatus of claim 13, wherein said means for modifying is further configured to modify the slice partition for at least some of the plurality of slices of the resampled picture by modifying the slice partition for at least one slice of the plurality of slices that includes the partial LCU to either (1) remove the partial LCU from the slice partition; or (2) include the entire LCU corresponding to the partial LCU in the slice partition.

15. The apparatus of claim 11, wherein said means for modifying is further configured to modify the slice partition for at least some of the plurality of slices of the resampled layer by dividing at least one slice of the plurality of slices into multiple sub-slices.

## Patentansprüche

1. Verfahren zum Codieren von Videoinformationen, wobei das Verfahren Folgendes beinhaltet:
Resampling von Videoinformationen eines Referenzbildes eines zu encodierenden Bildes, um ein resampeltes Bild zu erhalten, wobei das Referenzbild mehrere Slices und eine andere Bildgröße hat als das zu encodierende Bild;
Feststellen (604) von Slice-Definitionen für mehrere resampelte Slices in dem resampelten Bild, wobei die mehreren Slices des resampelten Bildes im Hinblick auf Anzahl und relativen Ort mehreren Slices des Referenzbildes entsprechen;
Feststellen (606), wenigstens teilweise auf der Basis der Slice-Definitionen, ob jeder der mehreren Slices des resampelten Bildes eine oder mehrere Slice-Partitionsregeln erfüllt, und **gekennzeichnet durch**:
Modifizieren, als Reaktion auf die Feststellung (608), dass wenigstens einer der mehreren Slices des resampelten Bildes wenigstens eine Slice-Partitionsregel nicht erfüllt, von Slice-Partitionen für wenigstens einige der mehreren Slices in dem resampelten Bild, die die wenigstens eine Slice-Partitionsregel nicht erfüllen, so dass er/sie die wenigstens eine Slice-Partitionsregel erfüllt/-en.

2. Verfahren nach Anspruch 1, wobei das genannte Feststellen das Feststellen beinhaltet, ob jeder der mehreren Slices des resampelten Bildes die ein oder mehreren Slice-Partitionsregeln erfüllt, durch Feststellen, ob ein Slice aus den mehreren Slices in dem resampelten Bild eine Disparität zwischen einer Höhe des Slice in einer ersten Spalte und einer Höhe des Slice in einer vorherigen Spalte beinhaltet, die größer ist als eine größte Codiereinheit (LCU), und/oder wobei das genannte Feststellen das Feststellen beinhaltet, ob jeder der mehreren Slices des resampelten Bildes die ein oder mehreren Slice-Partitionsregeln erfüllt, durch Feststellen, ob ein Slice aus den mehreren Slices in dem resampelten Bild mehr als eine unvollständige Scan-Zeile beinhaltet.

3. Verfahren nach Anspruch 1, wobei das genannte Feststellen das Feststellen beinhaltet, ob jeder der mehreren Slices des resampelten Bildes die ein oder mehreren Slice-Partitionsregeln erfüllt, durch Feststellen, ob ein Slice aus den mehreren Slices in dem resampelten Bild eine Teil-LCU beinhaltet, und wobei das genannte Modifizieren vorzugsweise das Runden der Teil-LCU beinhaltet, und wobei ferner das Runden der Teil-LCU vorzugsweise das Modifizieren der Slice-Partition für wenigstens einen Slice der mehreren Slices in dem resampelten Bild beinhaltet, das die Teil-LCU beinhaltet, um die Teil-LCU aus der Slice-Partition zu entfernen, und/oder wobei das Runden der Teil-LCU das Modifizieren der Slice-Partition für wenigstens einen Slice der mehreren Slices in dem resampelten Bild beinhaltet, das die Teil-LCU beinhaltet, so dass es die gesamte LCU beinhaltet, die der Teil-LCU in der Slice-Partition entspricht.

4. Verfahren nach Anspruch 1, wobei das genannte Modifizieren das Unterteilen von wenigstens einem Slice der mehreren Slices in mehrere Subslices beinhaltet, und wobei vorzugsweise, für wenigstens einige Subslices der mehreren Subslices, das Verfahren ferner das Assoziieren von wenigstens einigen der Informationen, die in einem Slice-Header des wenigstens einen Slice der mehreren Slices in dem resampelten Bild enthalten sind, mit einem Slice-Header des Subslice beinhaltet.

5. Verfahren nach Anspruch 1, wobei das Referenzbild ein Referenzbild für einen Einzelschicht-Video-Codec ist.

6. Verfahren nach Anspruch 5, das ferner das Hinzufügen des resampelten Bildes zu einer Referenzbildliste für das zu encodierende Bild beinhaltet und/oder ferner das Benutzen des resampelten Referenzbildes als kollokalisiertes Bild für eine zeitliche Bewegungsvektorableitung beinhaltet.

7. Verfahren nach Anspruch 1, wobei das Referenzbild ein Referenzbild aus einer tieferen Schicht als das zu encodierende Bild in einem mehrschichtigen Video-Codec ist.

8. Verfahren nach Anspruch 7, das ferner das Benutzen des resampelten Bildes zum Durchführen von Zwischenschichtprädiktion beinhaltet und/oder ferner das Hinzufügen des resampelten Bildes zu einer Referenzbildliste für das zu encodierende Bild beinhaltet und/oder ferner das Verwenden des resampelten Referenzbildes als kollokalisiertes Bild für zeitliche Bewegungsvektorableitung beinhaltet.

9. Verfahren nach Anspruch 1, das ferner das Encodieren des zu encodierenden Bildes anhand des resampelten Bildes beinhaltet und/oder ferner das Decodieren einer encodierten Kopie des Bildes unter Verwendung der resampelten Schicht beinhaltet und/oder ferner das Assoziieren jedes Blocks in dem resampelten Bild mit einem Slice-Header des Slice beinhaltet, der den kollokalisierten Block in dem Referenzbild beinhaltet und wobei die Blockgröße vorzugsweise 16x16 ist.

10. Nichtflüchtiges computerlesbares Speichermedium, auf dem Befehle gespeichert sind, die bei Ausführung bewirken, dass eine wenigstens einen Prozessor umfassende Vorrichtung das Verfahren nach einem der Ansprüche 1 bis 9 ausführt.

11. Vorrichtung (30, 31), die zum Codieren von Videoinformationen konfiguriert ist, wobei die Vorrichtung Folgendes umfasst:
Mittel zum Speichern von mit einem Bild assoziierten Videoinformationen;
Mittel für ein Resampling von Videoinformationen des Bildes, um ein resampeltes Bild zu erhalten, wobei das Bild mehrere Slices hat;
Mittel zum Bestimmen von Slice-Definitionen für mehrere Slices des resampelten Bildes, wobei die mehreren Slices des resampelten Bildes im Hinblick auf Anzahl und relativen Ort den mehreren Slices des Bildes entsprechen;
Mittel zum Feststellen, wenigstens teilweise auf der Basis der Slice-Definitionen, ob jeder der mehreren Slices des resampelten Bildes eine oder mehrere Slice-Partitionsregeln erfüllt, und **gekennzeichnet durch**:
Mittel zum Modifizieren von Slice-Partitionen für wenigstens einige der mehreren Slices des resampelten Bildes als Reaktion auf die Feststellung, dass wenigstens einer der mehreren Slices des resampelten Bildes wenigstens eine der ein oder mehreren Slice-Partitionsregeln nicht erfüllt.

12. Vorrichtung nach Anspruch 11, wobei wenigstens zwei der genannten Mittel zum Speichern von Videodaten, Mittel für ein Resampling, Mittel zum Feststellen von Slice-Definitionen, Mittel zum Feststellen und Mittel zum Modifizieren dieselben Mittel umfassen.

13. Vorrichtung nach Anspruch 11, wobei das genannte Mittel zum Feststellen ferner zum Feststellen konfiguriert ist, ob jeder der mehreren Slices des resampelten Bildes die ein oder mehreren Slice-Partitionsregeln erfüllt, durch Feststellen, ob ein Slice der mehreren Slices des resampelten Bildes eine Teil-LCU beinhaltet.

14. Vorrichtung nach Anspruch 13, wobei das genannte Mittel zum Modifizieren ferner zum Modifizieren der Slice-Partition für wenigstens einige der mehreren Slices des resampelten Bildes durch Modifizieren der Slice-Partition für wenigstens einen Slice der mehreren Slices konfiguriert ist, der die Teil-LCU beinhaltet, um entweder (1) die Teil-LCU aus der Slice-Partition zu entfernen; oder (2) die gesamte LCU, die der Teil-LCU entspricht, in die Slice-Partition einzubeziehen.

15. Vorrichtung nach Anspruch 11, wobei das genannte Mittel zum Modifizieren ferner zum Modifizieren der Slice-Partition für wenigstens einige der mehreren Slices der resampelten Schicht durch Unterteilen von wenigstens einem Slice der mehreren Slices in mehrere Subslices konfiguriert ist.

## Revendications

1. Méthode de codage d'informations vidéo, la méthode comprenant :
des informations vidéo de ré-échantillonnage d'une image de référence à coder pour obtenir une image ré-échantillonnée, l'image de référence ayant une pluralité de tranches et ayant une taille d'image différente de l'image à coder ;
déterminer (604) des définitions de tranches pour une pluralité de tranches ré-échantillonnées dans l'image ré-échantillonnée, la pluralité de tranches de l'image ré-échantillonnée correspondant en nombre et emplacement relatif à une pluralité de tranches de l'image de référence ;
déterminer (606), sur la base au moins partiellement des définitions de tranches, si chacune de la pluralité de tranches de l'image ré-échantillonnée satisfait à une ou plusieurs règles de segmentation en tranches, et **caractérisée en ce que** :
en réponse à la détermination (608) qu'au moins l'une de la pluralité de tranches de l'image ré-échantillonnée ne satisfait pas à au moins une règle de segmentation en tranches, modifier les segmentations en tranches pour au moins certaines de la pluralité de tranches dans l'image ré-échantillonnée qui ne satisfont pas à la au moins une règle de segmentation en tranches afin de satisfaire à la au moins une règle de segmentation en tranches.

2. Méthode selon la revendication 1, dans laquelle ladite détermination comprend déterminer si chacune de la pluralité de tranches de l'image ré-échantillonnée satisfait à l'une ou aux plusieurs règles de segmentation en tranches en déterminant si une tranche de la pluralité de tranches dans l'image ré-échantillonnée comprend une disparité entre une hauteur de la tranche dans une première colonne et une hauteur de la tranche dans une colonne précédente qui est plus grande qu'une unité de codage la plus grande (LCU) et/ou dans laquelle ladite détermination comprend déterminer si chacune de la pluralité de tranches de l'image ré-échantillonnée satisfait à l'une ou aux plusieurs règles de segmentation en tranches en déterminant si une tranche de la pluralité de tranches dans l'image ré-échantillonnée comprend plus qu'une ligne de balayage incomplète.

3. Méthode selon la revendication 1, dans laquelle la détermination comprend déterminer si chacune de la pluralité de tranches de l'image ré-échantillonnée satisfait à l'une ou aux plusieurs règles de segmentation en tranches en déterminant si une tranche de la pluralité de tranches dans l'image ré-échantillonnée comprend une LCU partielle et de préférence dans laquelle ladite modification comprend arrondir la LCU partielle et de préférence en outre dans laquelle arrondir la LCU partielle comprend modifier la segmentation en tranches pour au moins une tranche de la pluralité de tranches dans l'image ré-échantillonnée qui comprend la LCU partielle afin de retirer la LCU partielle de la segmentation en tranches et/ou dans laquelle arrondir la LCU partielle comprend modifier la segmentation en tranches pour au moins une tranche de la pluralité de tranches dans l'image ré-échantillonnée qui comprend la LCU partielle afin d'inclure la LCU entière correspondant à la LCU partielle dans la segmentation en tranches.

4. Méthode selon la revendication 1, dans laquelle ladite modification comprend diviser au moins une tranche de la pluralité de tranches en de multiples sous-tranches et de préférence où, pour au moins certaines sous-tranches des sous-tranches multiples, la méthode comprend en outre associer au moins certaines des informations incluses dans un en-tête de tranche de la au moins une tranche de la pluralité de tranches dans l'image ré-échantillonnée à un en-tête de tranche de la sous-tranche.

5. Méthode selon la revendication 1, dans laquelle l'image de référence est une image de référence pour un codec vidéo à une seule couche.

6. Méthode selon la revendication 5, comprenant en outre ajouter l'image ré-échantillonnée à une liste d'images de référence pour l'image à coder et/ou comprenant en outre utiliser l'image de référence ré-échantillonnée comme une image cooccurrente pour dérivation temporelle d'un vecteur de mouvement.

7. Méthode selon la revendication 1, dans laquelle l'image de référence est une image de référence d'une couche plus basse que l'image à coder dans un codec vidéo multicouches.

8. Méthode selon la revendication 7, comprenant en outre utiliser l'image ré-échantillonnée pour effectuer une prédiction inter-couches et/ou comprenant en outre ajouter l'image ré-échantillonnée à une liste d'images de référence pour l'image à coder et/ou comprenant en outre utiliser l'image de référence ré-échantillonnée comme une image cooccurrente pour dérivation temporelle d'un vecteur de mouvement.

9. Méthode selon la revendication 1, comprenant en outre coder l'image à coder en utilisant l'image ré-échantillonnée et/ou comprenant en outre décoder une copie codée de l'image en utilisant la couche ré-échantillonnée et/ou comprenant en outre associer chaque bloc dans l'image ré-échantillonnée à un en-tête de tranche de la tranche qui comprend le bloc cooccurrent dans l'image de référence et de préférence dans laquelle la taille de bloc est de 16x16.

10. Moyen de support de stockage non transitoire lisible par ordinateur ayant des instructions stockées dessus qui, lorsque exécutées, font qu'un appareil comprenant au moins un processeur, exécute la méthode selon l'une quelconque des revendications 1 à 9.

11. Appareil (30, 31) configuré pour coder des informations vidéo, l'appareil comprenant :
un moyen pour stocker des informations vidéo associées à une image;
un moyen pour ré-échantillonner des informations vidéo de l'image pour obtenir une image ré-échantillonnée ayant une pluralité de tranches ;
un moyen pour déterminer des définitions de tranches pour une pluralité de tranches de l'image ré-échantillonnée, la pluralité de tranches de l'image ré-échantillonnée correspondant en nombre et emplacement relatif à une pluralité de tranches de l'image ;
un moyen pour déterminer, sur la base au moins partiellement des définitions de tranches, si chacune de la pluralité de tranches de l'image ré-échantillonnée satisfait à une ou plusieurs règles de segmentation en tranches, et **caractérisé par** :
un moyen pour modifier les segmentations en tranches pour au moins certaines de la pluralité de tranches de l'image ré-échantillonnée en réponse à la détermination qu'au moins l'une de la pluralité de tranches de l'image ré-échantillonnée ne satisfait pas à au moins l'une ou aux plusieurs règles de segmentation en tranches.

12. Appareil selon la revendication 11, dans lequel au moins deux d'entre ledit moyen pour stocker des informations vidéo, moyen de ré-échantillonnage, moyen de détermination de définitions de tranches, moyen de détermination et moyen de modification, comprennent le même moyen.

13. Appareil selon la revendication 11, dans lequel ledit moyen de détermination est configuré en outre pour déterminer si chacune de la pluralité de tranches de l'image ré-échantillonnée satisfait à l'une ou aux plusieurs règles de segmentation en tranches en déterminant si une tranche de la pluralité de tranches de l'image ré-échantillonnée comprend une LCU partielle.

14. Appareil selon la revendication 13, dans lequel ledit moyen de modification est configuré en outre pour modifier la segmentation en tranches pour au moins certaines de la pluralité de tranches de l'image ré-échantillonnée en modifiant la segmentation en tranches pour au moins une tranche de la pluralité des tranches qui comprend la LCU partielle pour soit (1) retirer la LCU partielle de la segmentation en tranches ; soit (2) inclure la LCU entière correspondant à la LCU partielle dans la segmentation en tranches.

15. Appareil selon la revendication 11, dans lequel ledit moyen de modification est configuré en outre pour modifier la segmentation en tranches pour au moins certaines de la pluralité de tranches de la couche ré-échantillonnée en divisant au moins une tranche de la pluralité de tranches en de multiples sous-tranches.
